# EUROPÄISCHE PATENTSCHRIFT

(11) **EP 2 511 094 B1**
(45) Veröffentlichungstag und Bekanntmachung des Hinweises auf die Patenterteilung: **18.03.2015**
(21) Anmeldenummer: 12164026.2
(22) Anmeldetag: 13.04.2012
(51) Int. Cl.: B32B 29/00, B32B 3/24, B32B 27/10, B32B 27/16, B32B 27/34, D21H 27/36, D21H 21/40, B42D 15/00

(54) **Verfahren zur Herstellung eines Drucksubstrates und Drucksubstrat hergestellt nach einem solchen Verfahren**
Method for producing a print substrate and print substrate produced according to this method
Procédé de fabrication d'un substrat d'impression et substrat d'impression selon un tel procédé

(30) Priorität: 14.04.2011 CH 6732011
(43) Veröffentlichungstag der Anmeldung: 17.10.2012
(73) Patentinhaber: Landqart AG, 7302 Landquart (CH)
(72) Erfinder: Kocher, Christoph, 7302 Landquart (CH)
(74) Vertreter: Bremi, Tobias Hans

(56) Entgegenhaltungen:
- WO-A1-2004/076198
- WO-A1-2006/066431

## Beschreibung

### TECHNISCHES GEBIET

Die vorliegende Erfindung betrifft ein Verfahren zur Herstellung eines Mehrschichtsubstrats mit freiliegenden Kunststoffbereichen, sowie derartige hergestellte Mehrschichtsubstrate und Verwendungen von solchen Mehrschichtsubstraten.

### STAND DER TECHNIK

Drucksubstrate für Wertdokumente wie beispielsweise Banknoten sind einer ständigen Weiterentwicklung unterworfen, um den ebenfalls stetig wachsenden Bedürfnissen an Fälschungssicherheit entsprechen zu können. Von besonderem Interesse ist dabei, Sicherheiten zu schaffen, die im täglichen Gebrauch vom Benutzer ohne weitere technische Hilfsmittel zu erkennen sind, in ihrer Art und Weise aber nicht ohne weiteres imitiert werden können. Ein solches Sicherheitsmerkmal ist beispielsweise ein transparentes Sichtfenster, wie es von Banknoten auf Basis von Polymersubstrat her seit Längerem bekannt ist. Dieses Sichtfenster kann, als transparenter Bereich in einer ansonsten opaken Banknote, als selbständiges Sicherheitsmerkmal gelten, oder kann seinerseits wiederum Träger von zusätzlichen Sicherheitsmerkmalen sein. Solche Sichtfenster eröffnen Möglichkeiten für neue Sicherheitsmerkmale mit Funktionen, die auf einem opaken Untergrund nicht möglich sind. Beispielsweise können in solche Sichtfenster Farbpigmente integriert oder aufgedruckt werden, die in Reflexion einen anderen Farbeindruck ergeben als in Transmission. Solche Merkmale funktionieren umso besser, je höher die Transparenz und die Oberflächenqualität des Untergrundes ist. Ein weiteres Beispiel sind Merkmale basierend auf geprägten Mikrostrukturen, die beispielsweise Interferenz-Farbeffekte zeigen. Solche Merkmale funktionieren umso besser, je regelmässiger die Oberfläche ist, was eine hohe Oberflächengüte und eine gute Flachlage des Untergrundes voraussetzt.

In der WO2004/028825 wird ein Aufbau vorgeschlagen, bei dem ein Sicherheitspapier oberflächlich mit einer Folie versehen wird. In einer möglichen Ausführungsform wird zwischen zwei Folien eine fensterartig durchbrochene Papierbahn vorgesehen, wodurch ein mehr oder weniger transparentes Sichtfenster entstehen kann.

Die DE 43 34 848 beschreibt einen Papierträger mit einer fensterartigen Durchbrechung, die mit einer transparenten Abdeckfolie verschlossen ist, wodurch wiederum ein mehr oder weniger transparentes Sichtfenster entstehen kann.

Ein anderer Ansatz ist in der WO 03/085193 beschrieben. Dort wird ein Sicherheitsband im Papierformungsprozess so in ein Sicherheitspapier eingearbeitet, dass Sichtabschnitte in Form von mehr oder weniger transparentes Sichtfenstern im Wertdokument ausgebildet werden.

Einen wiederum anderen Ansatz verfolgt demgegenüber die WO2004/076198, welche ein Mehrschichtlaminat aus Papierlagen und Folienlagen beschreibt, bei dem die Papierlagen in einer bevorzugten Ausführungsform durchgängige Aussparungen aufweisen, wodurch sich im Laminat die gewünschten mehr oder weniger transparenten Sichtfenster ergeben.

Problematisch bei derartigen kombinierten Materialien aus Kunststoff und Papier ist es, dass infolge des Herstellungsprozesses häufig einseitig oder auf beiden Seiten frei liegende Kunststoffbereiche keine Flachlage mehr zeigen (Wellung, Ausbeulung) und/oder dass keine genügende Transparenz mehr vorhanden ist (insbesondere bei Fenstern nicht gewünscht) respektive dass eine Trübung vorliegt, des weiteren gibt es Probleme mit Fasermaterial, welches im Bereich des Fensters abgelagert/eingeschmolzen sein kann. Eine Trübung des Sichtfensters kann durch eine Oberflächenstruktur verursacht werden, die zu Streueffekten führt. So kann sich beispielsweise die Oberflächenstruktur von Giesswalzen und Presseurwalzen in einem Extrusionsprozess, von Laminatorwalzen in einem Rollen-Laminierprozess, von Transportbändern in einem Bandlaminierprozess in einer Bandpresse in den Sichtfenstern übertragen werden oder die Struktur von Transportfilzen kann sich auf ein Folienelement übertragen, welches auf einer Papiermaschine zur Herstellung eines Drucksubstrats mit Sichtfenstern eingebracht wird. Weiter kann eine Trübung des Sichtfensters durch Rückstände auf der Fensteroberfläche entstehen, so z.B. sich niederschlagende Monomerbestandteile in einem Extrusionsprozess, Faserrückstände, Staubpartikel, etc.

Welligkeit oder eine nicht optimale Flachlage des Sichtfensters kann sich z.B. dadurch ergeben, dass in einem Extrusionsprozess oder in einem Laminierprozess generierte Fenster auf den Walzen oder Transportbändern anhaften und beim Ablösen von den Walzen oder Transportbändern gedehnt werden. Auch beim Einbringen von Folienelementen auf einer Papiermaschine werden die Folienelemente gedehnt, insbesondere dann, wenn Merkmale auf den Folienelementen in Registrierung zu Wasserzeichen eingebracht werden, was durch Regelung der Bahnspannung der Folienelemente realisiert wird. Derart vorgespannt eingebrachte Folienelemente neigen naturgemäss dazu, sich durch die vorhandenen Eigenspannungen zu wellen.

Des Weiteren kann eine Weiterverarbeitung dazu führen, dass sich Sichtfenster verwerfen, beispielsweise bei Einbringung einer Blindprägung.

### DARSTELLUNG DER ERFINDUNG

Es ist entsprechend unter anderem Aufgabe der vorliegenden Erfindung, ein verbessertes Verfahren zur Herstellung eines Mehrschichtsubstrates, insbesondere als Druckträger wie beispielsweise als Sicherheitspapier (zum Beispiel Banknote), zur Verfügung zu stellen. Ein solches Mehrschichtsubstrat umfasst wenigstens eine erste Papierlage, sowie wenigstens eine mit der Papierlage verbundene Kunststoffschicht aus wenigstens einem (bevorzugt thermoplastischen) polymeren Material, wobei das Mehrschichtsubstrat auf wenigstens einer ersten Seite sowohl erste Bereiche aufweist, in denen die Oberfläche durch frei liegende Papierlage gebildet wird als auch zweite Bereiche aufweist, in denen die Oberfläche durch frei liegende Kunststoffschicht gebildet wird.

Eine Möglichkeit zur Herstellung eines solchen Mehrschichtsubstrates besteht darin, dass in einem ersten Schritt die Papierlage und die Kunststoffschicht zusammengeführt und gegebenenfalls vorläufig miteinander verbunden werden oder die Kunststoffschicht in die Papierlage eingebettet wird (beispielsweise im Rahmen des Papierherstellungsprozesses). In einem optionalen zweiten Schritt, welcher als separater Schritt, d.h. mit einer dazwischen erfolgenden Aufrollung der Substratbahn, oder aber auch als direkt anfolgender, d.h. on-line durchgeführter Schritt nach dem ersten Schritt durchgeführt werden kann, wird das dadurch gebildete Mehrschichtsubstrat zwischen einem Walzenpaar oder in einer Bandpresse oder in einem Walzenpaar mit einem um die zweite Walze umlaufendem Band (sogenannte Sleeve-Technologie) in einem kontinuierlichen Prozess gepresst. In diesem Schritt wird das Mehrschichtsubstrat gepresst und normalerweise findet in diesem Schritt die definitive Verbindung zwischen Kunststoffschicht und Papierlage statt.

Nach der Erfindung wird nun in einem dritten Schritt anschließend das Mehrschichtsubstrat wenigstens auf der ersten Seite in wenigstens den zweiten Bereichen, normalerweise in den ersten und den zweiten Bereichen, in einem kontinuierlichen Prozess einer Flammenbehandlung und/oder einer Heissluftbeaufschlagung unterzogen.

Unter einer Heißluftbeaufschlagung ist dabei im Zusammenhang mit dieser Erfindung eine Behandlung mit einem direkt oder indirekt auf das Substrat gerichteten Heißluftstrom zu verstehen. Ein solcher Heißluftstrom hat dabei, in jenem Bereich, in dem er auf das Substrat auftrifft, bevorzugtermassen eine Temperatur von wesentlich oberhalb der Raumtemperatur, namentlich von mindestens 100 oder 150 °C. Die Höhe dieser Temperatur der Heißluft, damit sie die gewünschte Wirkung erzeugt, hängt unter anderem von der Transportgeschwindigkeit, vom verwendeten Polymer für die Kunststoffschicht und von der Länge des mit der Heißluft beaufschlagen Abschnittes der Bahn ab, und kann vom Fachmann eingestellt werden. Vorzugsweise hat der Heißluftstrom an dieser Stelle eine Temperatur von mindestens 200 °C beispielsweise für Polyamid bei einer typischen Transportgeschwindigkeit von 80 m/min. Weitere bevorzugte Bereiche für die Temperatur der Heißluft an dieser Stelle werden weiter unten angegeben und erläutert.

Überraschenderweise zeigt es sich, dass eine solche Flammenbehandlung oder Heissluftbeaufschlagung mit einer heißen Flamme (ein kaltes Plasma kann die erfindungsgemäße Wirkung nicht erzeugen) respektive heisser Luft in einer solchen Situation den Vorteil bringt, dass die frei liegende Kunststoffschicht, welche ohne eine solche Behandlung infolge des Herstellungsprozesses in der Regel nicht transparent ist und eine Trübung aufweist, plötzlich in eine transparente Schicht im wesentlichen ohne Trübung umgewandelt werden kann. Des weiteren werden gegebenenfalls im Bereich der freiliegenden Kunststoffschicht vorhandene Überreste von Fasern, Füllstoffen, Bindemitteln, etc. entfernt. Außerdem kann bewirkt werden, dass der freiliegende Bereich der Kunststoffschicht wieder eine vollständige Flachlage einnimmt. An sich ist die Flammenbehandlung von Kunststoffoberflächen bekannt, dies jedoch stets immer im Zusammenhang mit einer Vorbereitung der Oberfläche für einen nächsten Schichtauftrag. Mit anderen Worten wird die Flammenbehandlung, wie sie aus dem Stand der Technik für Kunststoffoberflächen bekannt ist, nur dazu eingesetzt, die Chemie der Oberfläche zu modifizieren so dass anschließend eine nächste Schicht aufgebracht werden kann und verbunden werden kann. Dies ist nicht die Wirkung, die nach der Erfindung erzeugt wird, denn anschließend wird das Mehrschichtsubstrat nicht mit einer weiteren Schicht versehen und die Flammenbehandlung respektive die Heissluftbeaufschlagung dient in der Hauptsache nicht dazu, die Oberflächenchemie der Kunststofflage für einen nächsten Auftrag einer Schicht oder eines Druckes vorzubereiten.

Es war tatsächlich völlig überraschend, dass eine Flammenbehandlung oder eine Heissluftbeaufschlagung in einem solchen Fall die Transparenz und die Flachlage der freiliegenden Kunststoffbereiche erhöhen kann. Überraschend ist zudem, dass die ebenfalls vorhandenen Oberflächenbereiche aus Papier durch die Flammenbehandlung oder die Heissluftbeaufschlagung nicht beeinträchtigt werden. Tatsächlich würde ein Fachmann eine Flammenbehandlung oder eine Heissluftbeaufschlagung für die Veränderung der Oberflächenchemie einer Kunststofffläche in Betracht ziehen, er würde aber, weil er davon ausgehen müsste, dass eine Papieroberfläche infolge der hervorstehenden Cellulose-Fasern durch die Flammen Schaden nehmen würde und beispielsweise eine dunkle Färbung erhalten würde, nicht auf die Idee kommen, ein Mehrschichtsubstrat, bei welchem auch Bereiche mit Papieroberfläche vorhanden sind, einer Flammenbehandlung oder Heissluftbeaufschlagung zu unterziehen.

Überraschenderweise wird mit der Flammbehandlung oder Heissluftbeaufschlagung zudem die Temperaturstabilität der Sichtfenster erhöht. Es zeigt sich, dass sich Sichtfenster ohne zusätzliche Flammbehandlung oder Heissluftbeaufschlagung in gewissen weiteren Verarbeitungsverfahren wie z.B. Applikationsverfahren und/oder Druckverfahren, in denen ein Wärmeeintrag in das Substrat erfolgt, verformen können. Ein Beispiel eines solchen Applikationsverfahrens ist die Heissprägeapplikation, bei der durch beheizte Prägewerkzeuge beispielsweise Folien mit Sicherheitsmerkmalen und/oder als Informationsträger, z.B. Hologrammfolien, übertragen werden, die aber auch das umliegende Drucksubstrat aufwärmen. Ein weiteres Beispiel ist das Tiefdruckverfahren und insbesondere auch das Siebdruckverfahren, bei welchem eine aufgebrachte Siebdruckfarbe durch Wärme, Warmluft oder Infrarot-Trockner getrocknet wird, oder, im Fall von UV-trocknenden Siebdruckfarben mit UV-Trocknern eine Vernetzungsreaktion des Bindemittels initiiert wird. Allen Trockenverfahren ist gemeinsam, dass eine Wärmebeeinflussung des Substrates erfolgt, die sich negativ auf die Eigenschaften der Fenster, z.B. auf die Flachlage der Fenster, auswirken kann.

Sichtfenster, die einer erfindungsgemässen Flammbehandlung oder Heissluftbeaufschlagung unterzogen wurden, verformen sich bei erneutem Wärmeeintrag in solchen Weiterverarbeitungsschritten unerwarteterweise nicht mehr oder zumindest deutlich weniger. Ohne sich dadurch einer wissenschaftlichen Erklärung dieser Wirkung zu verpflichten, so scheint es doch so, dass durch die kontrollierte Wärmeeinbringung durch die Flammbehandlung oder Heissluftbeaufschlagung, ggf. in Kombination mit einer unter Zugspannung stehender Substratbahn, Eigenspannungen kontrolliert gelöst werden. Die Kunststoffschicht kann dabei in Form von Patches aufgetragen sein, in Form von Streifen oder auch ganzflächig.

Die Flammenbehandlung oder Heissluftbeaufschlagung kann dabei unter Zuhilfenahme einzelner Brennerdüsen respektive Heißluftgebläse erfolgen, die einzelnen Brennerdüsen respektive Heißluftgebläse sind dabei typischerweise in einer Reihe quer zur Laufrichtung der Bahn angeordnet, oder aber auch nur in Abschnitten als einzelne Brenner/Gebläse oder Gruppen von Reihen von Brennern/Gebläsen. Alternativ können Bandbrenner oder Schlitzbrenner respektive Bandgebläse oder Schlitzgebläse eingesetzt werden.

Eine erste bevorzugte Ausführungsform des vorgeschlagenen Verfahrens ist dadurch gekennzeichnet, dass eine Heißluftbeaufschlagung eingesetzt wird, und dass diese dazu führt, dass die Temperatur des Mehrschichtsubstrates an der Stelle des Auftreffens des entsprechenden Heißluftstromes oberhalb von 100 °C, vorzugsweise oberhalb von 120 °C, insbesondere bevorzugt oberhalb von 125 °C liegt. Bei einer Kunststoffschicht aus teilkristallinem thermoplastischem Kunststoff liegt die Temperatur des Mehrschichtsubstrates an dieser Stelle aber bevorzugtermassen unterhalb der Temperatur des Schmelzpunktes, aber oberhalb des Glasübergangspunktes der Kunststoffschicht. Bei einer Kunststoffschicht aus vollamorphem thermoplastischem Kunststoff liegt die Temperatur des Mehrschichtsubstrates an dieser Stelle bevorzugtermassen unterhalb der Temperatur des Glasübergangspunktes der Kunststoffschicht. Für die unten angegebenen bevorzugten Materialien, insbesondere bei Polyamid, beispielsweise Polyamid 12 mit einem Schmelzpunkt von 178°C als Kunststoffmaterial, liegt entsprechend die Obergrenze dieser Temperatur im Bereich von 130°C - 150°C. Um dies zu erreichen wird beispielsweise bei einer Transportgeschwindigkeit von 80 m/min die Temperatur des Heißluftstromes, dort wo er auf das in dem entsprechenden zweiten Bereich freigelegte Polyamid der Kunststoffschicht auftrifft, wenigstens 200°C beträgt, wobei ein solcher Luftstrom beispielsweise über eine Schlitzdüse einer Breite von ca. 4 mm und einer Länge von ca. 30 cm entlang der Transportrichtung der Bahn, eingesetzt wird, und ein Heißluftfluss im Bereich von 500-800 l/min eingestellt wird.

Eine weitere bevorzugte Ausführungsform des Verfahrens ist dadurch gekennzeichnet, dass eine Heißluftbeaufschlagung eingesetzt wird, und dass die Heißluftbeaufschlagung durch eine Schlitzdüse erfolgt, welche mit ihrer Längsachse parallel zur Transportrichtung des in einem kontinuierlichen Prozess als Bahn gefertigten Mehrschichtsubstrates liegt, und welche und auf die zweiten Bereiche gerichtet ist. Bevorzugtermassen ist dann zudem auf der gegenüberliegenden Seite der Bahn des Mehrschichtsubstrates eine zweite korrespondierende (und typischerweise gleich ausgestaltete, ausgerichtete und angesteuerte) Schlitzdüse angeordnet ist.

Bevorzugtermassen weist eine für die Heißluftbeaufschlagung eingesetzte Schlitzdüse, bei einer Transportgeschwindigkeit von wenigstens 40 m/min, vorzugsweise von wenigstens 60 m/min, eine Länge entlang der Transportrichtung auf, welche wenigstens 10 cm, oder wenigstens 20 cm oder wenigstens 30 cm beträgt, und deren Breite quer zur Transportrichtung geringer oder gleich ist wie die Breite quer zur Transportrichtung der zweiten Bereiche, wobei diese Breite vorzugsweise höchstens 10 mm, oder höchstens 6 mm, oder höchstens 5 mm beträgt.

Die Breite einer solchen Schlitzdüse kann dabei auch geringer sein als die Breite einer entsprechenden Ausnehmung in der Substratbahn, solche Ausnehmungen sind typischerweise in einer Reihe in der Substratbahn angeordnet, und werden unter der Schlitzdüse vorbeigeführt. Diese geringere Breite der Schlitzdüse ist möglich und häufig sogar bevorzugt, weil die Heißluft auch in transversale Richtung beim auftreffen auf die Bahn verteilt wird und entsprechend optimal zugeführt wird. Bevorzugtermassen wird eine solche Schlitzdüse jeweils zentriert über der jeweiligen Reihe von Ausnehmungen in der Substratbahn angeordnet.

Stromab, in Transportrichtung, einer solchen Schlitzdüse kann, gemäß einer weiteren bevorzugten Ausführungsform des Verfahrens, eine spezifisch auf die zweiten Bereiche gerichtete oder eine sich über die gesamte Bandbreite erstreckende Kaltluftdüse angeordnet sein. Diese ist bevorzugtermassen in einer Gegenstromrichtung, d.h. nicht senkrecht auf die Bahn sondern leicht gegen die Transportrichtung geneigt gerichtet, angeordnet. Zusätzlich oder alternativ kann die Substratbahn stromab, in Transportrichtung, einer solchen Schlitzdüse, über eine Kühlwalze oder ein Kühlwalzenpaar geführt werden.

Das Mehrschichtsubstrat kann, gemäß einer ersten bevorzugten Ausführungsform, wenigstens eine erste Papierlage, wenigstens eine zweite Papierlage, sowie wenigstens eine, zwischen den Papierlagen angeordnete und mit den Papierlagen verbundene Kunststoffschicht aus wenigstens einem thermoplastischen polymeren Material, umfassen. Dabei weist wenigstens eine der Papierlagen wenigstens eine bereichsweise durchgehende Aussparung auf, so dass an diesen Stellen die Kunststoffschicht unter Ausbildung eines Sichtfensters an die Oberfläche tritt. Die Kunststoffschicht wird dabei in schmelzflüssigem Zustand zwischen die Papierlagen zugeführt, und die Papierlagen anschliessend zwischen einem Walzenpaar in einem kontinuierlichen Prozess gepresst, wobei eine stoffschlüssige Verbindung zwischen den Papierlagen und der Kunststoffschicht (typischerweise unter Ausbildung einer Penetrationszone, in welcher Teile der Kunststoffschicht mit der Masse des Faserverbundes der Papierlagen verbunden sind) entsteht.

Die Kunststoffschicht kann dabei über die gesamte Bandbreite der Papierbahnen ausgebildet werden, oder aber auch nur in Form von Streifen, dort wo die Aussparungen vorhanden sind.

Bevorzugtermassen hat die Kunststoffschicht ein Flächengewicht von mehr als 20 g/m2 und höchstens 100 g/m2. Insbesondere bevorzugtermassen hat die Kunststoffschicht ein Flächengewicht von 22-80g/m2, respektive wird mit einem solchen Flächengewicht aufgetragen. Ganz besonders bevorzugt ist Flächengewicht von 25-40 g/m2.

Gemäß einer weiteren Ausführungsform kann ein solches Mehrschichtsubstrat hergestellt werden, indem die Kunststoffschicht als Kunststofffolie (im festen Zustand) mit bevorzugtermassen im wesentlichen gleicher Bahnbreite wie jene der beiden Papierlagen zugeführt wird, und die Papierlagen anschliessend zwischen einem Walzenpaar oder in einer Bandpresse in einem kontinuierlichen Prozess unter Anwendung von Hitze und/oder Druck gepresst werden, wobei bevorzugtermassen ohne zusätzlichen Haftvermittler eine stoffschlüssige Verbindung zwischen den Papierlagen und der Kunststoffschicht (insbesondere unter Ausbildung einer Penetrationszone, in welcher Teile der Kunststoffschicht mit der Masse des Faserverbundes der Papierlagen verbunden sind), ergibt.

Typischerweise ist wenigstens eine, bevorzugt beide Papierlagen im Mittel gleich dick oder bevorzugtermassen dicker sind als die Kunststofflage.

Beispielsweise weisen beide Papierlagen jeweils durchgehende Aussparungen auf, und diese Aussparungen werden derart registriert zugeführt, dass sich wenigstens bereichsweise Regionen ausbilden, in welchen die Kunststoffschicht nur einseitig frei liegt. Gemäß einer weiteren Ausführungsform wird das Material der Kunststoffschicht beim Verfahren mit schmelzflüssigem Auftrag der Kunststoffschicht bei einer Schmelzetemperatur, bevorzugt bei Austritt aus der Schlitzdüse, im Bereich von 250-350° zugeführt, bevorzugt bei einer Viskosität im Bereich von 50-1000 Pa s, insbesondere bevorzugt bei einer Viskosität im Bereich von 500-1000 Pa s.

Gemäß einer weiteren Ausführungsform erfolgt der Eintrag der schmelzflüssigen Polymerlage über eine Schlitzdüse, welche in unmittelbaren Kontakt zur Papierlagen steht, wobei die Schmelze als Schicht aufgetragen wird, oder über eine Schlitzdüse, welche einen gewissen Abstand von den Papierlagen hat, wobei sich zwischen Schlitzdüse und Papierlagen ein Schmelzevorhang ausbildet.

Der Eintrag der schmelzflüssigen Polymerlage kann aber auch über eine Gravurwalze, eine Siebdruckwalze oder eine Auftragswalze, insbesondere unter Verwendung eines Dreiwalzenwerkes, erfolgen.

Das Material der Kunststoffschicht kann im Falle des schmelzflüssigen Auftrags als Präpolymer, als Polymerdispersion oder als Polymerlösung, welche während oder im Anschluss an die Verbindung mit den Papierlagen chemisch oder physikalisch aushärtet oder/und ausreagiert oder/und trocknet und/oder geliert, zugeführt werden.

Die Kunststoffschicht wird bevorzugtermassen ganzflächig über die gesamte Fläche der beiden Papierlagen (das heißt beide Papierlagen haben die gleiche Bandbreite) ausgebildet. Generell liegt zwischen dem Walzenpaar vorzugsweise ein Liniendruck im Bereich von 0-500 N/cm vor, bevorzugterweise im Bereich von 50-250 N/cm.

Sofern sich solche ausbilden, so weisen die Penetrationszonen vorzugsweise eine mittlere Dicke im Bereich von 5-30 µm, insbesondere bevorzugt im Bereich von 10-20 µm auf.

Eine weitere bevorzugte Ausführungsform ist dadurch gekennzeichnet, dass beide Papierlagen jeweils durchgehende Aussparungen aufweisen, und diese Aussparungen derart registriert zugeführt werden, dass sich wenigstens bereichsweise Sichtfenster ausbilden, wobei die Sichtfenster bevorzugt vollständig transparent sind. Die Aussparungen können entweder bereits in Papierherstellungsprozess erzeugt worden sein, sie können aber, und dies ist die bevorzugte Variante, auch unter Zuhilfenahme von Stanzeinheiten nach dem Papierherstellungsprozess erzeugt werden, kurz vor der Herstellung des Mehrschichtsubstrats. Auch eine Kombination von gestanzten und im Papierherstellungsprozess hergestellten Aussparungen ist möglich.

Bevorzugtermassen handelt es sich beim thermoplastischen polymeren Material der Kunststoffschicht um ein transparentes Material, bevorzugtermassen um ein Material mit einer Lichttransmission von wenigstens 80 %, bevorzugt von wenigstens 90 % und bevorzugtermassen einer Trübung von höchstens 10, insbesondere bevorzugt von höchstens 5.

Als transparentes Material, wie dieser Begriff in dieser Schrift verwendet wird, soll Material respektive eine daraus gebildete Kunststoffschicht verstanden werden, deren Lichttransmission wenigstens 60%, insbesondere bevorzugt 80% beträgt, wenn das transparente Kunststoffmaterial in Form eines Plättchens von 2mm Dicke vorliegt. Der Wert der Lichttransmission ist dabei im Rahmen dieses Textes stets als bestimmt nach der Methode ASTM D1003 (Lichtart CIE-C) zu verstehen. Bevorzugtermassen beträgt die Trübung (Haze) einer aus der Polyamidformmasse hergestellten Platte einer Dicke von 2 mm höchstens 15, bevorzugt höchstens 10, insbesondere bevorzugt höchstens 8 (gemessen nach ASTM D1003 wie oben angegeben).

Bei einem Drucksubstrat mit Sichtfenstern, welches im oben beschriebenen Extrusionsverfahren hergestellt wird, indem zwei (registergenau) gestanzte Papierbahnen mit einer durch eine Schlitzdüse extrudierten Schmelze aus Polyamide, insbesondere Polyamid-12, verbunden werden, wobei die Lagen zwischen einem Walzenpaar gepresst werden, ergeben sich Sichtfenster, die eine Transmission von typischerweise ca. 70% aufweisen. Wird im Produktionsprozess eine erfindungsgemässe Flammpolierung respektive Heißluftbeaufschlagung der Sichtfenster vorgenommen, wird die Transmission dadurch auf 80-95%, normalerweise auf ca. 90% gesteigert. Die angegebenen Transmissionswerte sind gemessen bei 450 nm und die Polyamidfolie weise an der gemessenen Stelle eine Dicke im Bereich von 0.035-0.040 mm auf. Eine weitere Kenngrösse für die Transparenz ist die Trübung, gemessen als FTU Turbidity bei 530 nm, wobei eine FTU Turbidity von 0 einer Transmission von 100% entspricht. Die FTU Turbidity von Sichtfenstern ohne Flammpolierung respektive Heißluftbeaufschlagung liegt bei 43, diejenige von Sichtfenstern nach Flammpolierung liegt bei 11.

Eine besonders hervorragende Wirkung der Flammenbehandlung oder Heissluftbeaufschlagung kann erzielt werden, wenn die Flammenbehandlung oder Heissluftbeaufschlagung im kontinuierlichen Prozess an einer Stelle durchgeführt wird, wo die Substratbahn frei geführt wird und nicht in Kontakt mit einer Walze oder einem Führungselement steht. Entgegen den Erwartungen ist es also so, dass die Flammenbehandlung oder Heissluftbeaufschlagung vorteilhafter Weise nicht beispielsweise an einer Stelle durchgeführt wird, bei welcher die Bahn gerade um eine Walze geführt wird und gewissermassen die Walze zur Formgebung beitragen kann, sondern die Flammenbehandlung oder Heissluftbeaufschlagung ist besonders dann effizient, wenn sie dort durchgeführt wird, wenn die Substratbahn ansonsten nicht geführt oder durch andere Elemente berührt wird.

Beste Resultate können erzielt werden, wenn, wie weiterhin bevorzugt, die Flammenbehandlung oder Heissluftbeaufschlagung im kontinuierlichen Prozess an einer Stelle durchgeführt wird, wo die Substratbahn frei geführt wird und nicht in Kontakt mit einer Walze oder einem Führungselement steht, und wo die Substratbahn in im wesentlichen vertikaler Richtung, bevorzugt von oben nach unten, geführt wird. Es zeigt sich, dass dann, insbesondere wenn von oben nach unten geführt wird, offenbar die Kunststoffschicht sich optimal relaxiert unter Einwirkung der Flammenbehandlung oder Heissluftbeaufschlagung und optimale Transparenz, Trübung, und Flachlage erzielt werden kann. Bevorzugtermassen folgt demgemäss auf die Brenner der Flammpolierung respektive die Heißluftgebläse der Heißluftbeaufschlagung eine längere frei geführte Bahnstrecke von im Bereich von 100 - 1000 mm, beispielsweise ca. 500 mm, auf welcher die Sichtfenster auskühlen und dabei Festigkeit erlangen können. Weiter oder alternativ folgt bevorzugtermassen als nächstes Element eine Kühlwalze oder ein Kühlwalzenpaar, um durch die Flammpolierung respektive Heißluftbeaufschlagung eingebrachte Restwärme aus dem Substrat abzuführen. Zwischen Brennern/Gebläsen und optionalen Kühlwalzen können optional Blasluftdüsen angebracht werden, mit welchen die Substratbahn auf der gesamten Breite oder zonenweise, bevorzugtermassen nur über den Sichtfenstern, mit Blasluft zusätzlich gekühlt werden. Solche Luftdüsen sind bevorzugtermassen gegen die Laufrichtung der Substratbahn gerichtet, um allfällig mit der Papierbahn mitlaufende laminare Luftströmungen möglichst effizient zu durchbrechen.

Bevorzugtermassen wird bei der Flammenbehandlung eine Gas/Luft Flamme und/oder eine Gas/Sauerstoff Flamme eingesetzt. Bevorzugtermassen wird als Brennmedium Erdgas (Propan/Butan) verwendet, wobei der Gasstrom mit Pressluft vermengt wird. Selbstverständlich sind andere Brenngase, z.B. Acetylen etc. anwendbar. Normalerweise wird ein Energieeintrag im Bereich von 0.4-2 j/mm2 auf die Oberfläche der Bahn eingestellt, insbesondere bevorzugt im Bereich von 0.6-1 j/mm2.

Um eine sauber brennende, nicht russende, energiereiche Flamme zu erhalten, hat sich bewährt, mit Propan/Butan und Druckluft im Volumenstromverhältnis 1:1-4:1, bevorzugt im Bereich von 1.5:1 bis 2.5:1, insbesondere bevorzugtermassen circa 2:1 zu arbeiten. Bevorzugtermassen wird bei der Heissluftbeaufschlagung wenigstens ein, bevorzugt unmittelbar auf den zu bearbeitenden Oberflächenbereich des Mehrschichtsubstrates gerichtetes Heissluftgebläse eingesetzt, wobei vorzugsweise ein Heissluftstrom, am zu bearbeitenden Oberflächenbereich des Mehrschichtsubstrates, von im Bereich von 400-1000 l/min, vorzugsweise von 500-800 l/min, erfolgt, dies vorzugsweise derart, dass die heisse Luft am zu bearbeitenden Oberflächenbereich des Mehrschichtsubstrates eine Temperatur im Bereich von 150-300°C vorzugsweise von 200 - 250°C aufweist (wobei diese Temperatur in gewissem Umfang von Parametern wie dem verwendeten Material und der Dicke der Kunststoffschicht abhängt, die angegebenen Temperaturbereiche gelten insbesondere für Materialien mit Schmelzpunkten/Glasübergangspunkten im Bereich der hier angegebenen Polyamide und eine Dicke im Bereich von 10-50 µm, vorzugsweise im Bereich 30-40 µm), und/oder dadurch ein Energieeintrag im Bereich von 0.01-0.5 j/mm² auf die Oberfläche der Bahn erfolgt, insbesondere bevorzugt im Bereich von 0.02-0.1 j/mm². Als Heissluftgebläse im Sinne der Erfindung kommen auch Lufterhitzer in Frage, bei welchen der Luftstrom dezentral erzeugt wird. Geeignete derartige Heissluftgebläse und Lufterhitzer für den erfindungsgemässen Einsatz sind beispielsweise erhältlich von Leister AG, Kaegiswil, Schweiz.

Typischerweise ist bei der Flammenbehandlung respektive Heißluftbeaufschlagung der Abstand zwischen der Austrittsöffnung des brennbaren Gasgemisches respektive der Heißluft und der Substratbahn im Bereich von 5-100 mm liegt, vorzugsweise im Bereich von 10-50 mm. Im Fall der Heißluftbeaufschlagung liegt der bevorzugte Abstandsbereich bei 10-50 mm. Bevorzugtermassen wird der Abstand so eingestellt, dass die (von Auge sichtbare) Flammenspitze der Gasflamme die Oberfläche des Substrates gerade streift. Der Abstand kann auch so gewählt sein, dass die Flammenspitze das Substrat nicht berührt, die Erfahrung zeigt aber, dass dann eine wesentlich höhere Energie benötigt wird, um die gewünschten Effekte herbeizuführen. Bei der Flamme oder unmittelbar stromabwärts der Flamme liegt bevorzugtermassen eine Temperatur im oder wenigstens auf der Oberfläche des Materials des Fensters im Bereich von oberhalb oder nahe Tg (bevorzugt nicht mehr als 30 Grad unterhalb) und/oder oberhalb oder nahe Tₘ (bevorzugt nicht mehr als 30 Grad unterhalb).

Es wird bevorzugt, das Mehrschichtsubstrat von beiden Seiten einer Flammenbehandlung respektive einer Heißluftbeaufschlagung zu unterziehen. Es zeigt sich, dass dadurch am wenigsten Verzug der Substratbahn resultiert und insbesondere bei durchgängigen Fenstern wird so die optimale Transparenz erzielt.

Grundsätzlich kann die Flammenbehandlung oder Heißluftbeaufschlagung auf einer Seite (oder beiden Seiten) auch mehrfach hintereinander erfolgen. Sie kann, wenn auf beiden Seiten durchgeführt, gestaffelt durchgeführt werden, sie kann aber, und diese Variante ist bevorzugt, so durchgeführt werden, dass die Flammenbehandlung respektive die Heißluftbeaufschlagung von beiden Seiten an der gleichen Position, bezogen auf die Transportrichtung der Bahn, durchgeführt wird.

Typischerweise wird das Mehrschichtsubstrat im Bereich der Flammenbehandlung/Heißluftbeaufschlagung mit einer Bahngeschwindigkeit im Bereich von 40-160 m/s, bevorzugt im Bereich von 60-120 m/s insbesondere bevorzugt im Bereich von 80-100 geführt.

Eine weitere bevorzugte Ausführungsform ist dadurch gekennzeichnet, dass die Substratbahn aus Mehrschichtsubstrat entlang der Transportrichtung über erste Oberflächenbereiche verfügt, in welchen die Kunststofffolie nicht an die Oberfläche tritt und die Oberfläche ausschließlich durch eine der Papierbahnen gebildet wird, und über zweite Oberflächenbereiche, an welchen die Kunststofffolie wenigstens abschnittsweise, bevorzugt ausschließlich abschnittsweise, an die Oberfläche tritt, und dass die Flammenbehandlung als Streifen-Flammenbehandlung respektive die Heißluftbeaufschlagung als Streifen-Heißluftbeaufschlagung durchgeführt wird, so dass nur die zweiten Oberflächenbereiche mit Flamme respektive Heißluft beaufschlagt werden. Eine solche Streifen-Flammenbehandlung/Heißluftbeaufschlagung kann sich insbesondere dann als vorteilhaft erweisen, wenn eine Flammenbehandlung/Heißluftbeaufschlagung über die gesamte Breite zu einem zu großen Schrumpf in transversaler Richtung Anlass gibt.

Eine weitere bevorzugte Ausführungsform ist dadurch gekennzeichnet, dass die Flammenbehandlung/Heißluftbeaufschlagung als Flammenbehandlung/Heißluftbeaufschlagung über die gesamte Bahnbreite, bevorzugtermassen von beiden Seiten, durchgeführt wird. Eine solche Behandlung führt zu einem optimal homogenen Produkt insbesondere was die Oberflächenbeschaffenheit der Papierbereiche sowie der Kunststoffbereiche für eine spätere Bearbeitung wie beispielsweise eine Bedruckung etc. betrifft.

Bevorzugtermassen handelt es sich beim thermoplastischen polymeren Material der Kunststoffschicht um Polyethylen (PE), Polypropylen (PP), Polyvinylchlorid (PVC), weich-PVC (PVC-P), Polystyrol (PS), Polycarbonat (PC), Polymethylmethacrylat (PMMA), Polyoxymethylen (POM), Polyethylenterephthalat (PET), Polyester, co-Polyester, Polyetheretherketon (PEEK), Polyamid, oder Copolymere oder Mischungen (Blends) davon. Insbesondere bevorzugt wird Polyamid 6 (PA6) oder Polyamid 12 (PA12), Polyamid auf Basis aliphatischer und cycloaliphatischer Bausteine oder amorphes Co-Polyamid, bevorzugt auf Basis von PA 12, oder um Copolymere oder Blends daraus. Besonders bevorzugt werden amorphe, mittel- bis hochviskose Polyamid-12 Typen, ggf. als Blend mit 20 - 30 % transparenten, thermoplastisch verarbeitbaren Polyamiden auf Basis aliphatischer und cycloaliphatischer Bausteine (bevorzugt auf Basis von MACM12, das heißt Systeme nach der EP-A-0 837 087 oder der EP-A-0 725 101) zur Verhinderung der Kristallisation und damit verbundenen Trübung des PA 12 Anteils unter Bewahrung der mechanischen Eigenschaften der PA 12 Typen. Andererseits kann den Polymeren ein Nukleierungs-Hilfsmittel, bevorzugtermassen in Form eines Masterbatches (normalerweise aus dem gleichen Material wie die Hauptkomponente mit einem Anteil an Nukleierungs-Hilfsmittel), beigemengt werden, um die Kristallisation gezielt zu fördern und/oder einzustellen.

Eine weitere bevorzugte Ausführungsform ist dadurch gekennzeichnet, dass das thermoplastische polymere Material der Kunststoffschicht einen Glasübergangspunkt oberhalb von 0° C, bevorzugt oberhalb von 40° C aufweist.

Bei wenigstens einer, bevorzugt bei beiden der Walzen kann es sich um hochglanzpolierte Stahlwalzen handeln. Bei wenigstens einer, bevorzugt bei beiden Walzen kann es sich um anti-adhäsiv ausgerüstete Walzen handeln. Bei wenigstens einer, bevorzugt bei beiden Walzen kann es sich um Walzen mit strukturierter Oberfläche handeln. Bei wenigstens einer, bevorzugt bei beiden Walzen kann es sich um Gravurwalzen handelt. Bei wenigstens einer, bevorzugt bei beiden Walzen kann es sich um Walzen mit duktiler Oberfläche handeln. Eine bevorzugte Ausführungsform des Verfahrens ist dadurch gekennzeichnet dass es sich bei einer Walze um eine Gummiwalze mit anti-adhäsiver Oberfläche, beispielsweise mit Teflonüberzug, und bei der zweiten Walze um eine hochglanzpolierte, bevorzugtermassen hartverchromte Chromstahlwalze handelt.

Eine weitere bevorzugte Ausführungsform des Verfahrens ist dadurch gekennzeichnet, dass wenigstens eine der Papierlagen wenigstens ein Sicherheitsmerkmal, bevorzugt ausgewählt aus der Gruppe: Wasserzeichen, insbesondere Graustufen-Wasserzeichen, Sicherheitsfaden, OVD, Melierfasern, Sicherheitspigmente, irisierende Farbapplikationen, Chip, insbesondere RFID-Chip, Transponder, Magnetstreifen, aufweisen.

Alternativ oder zusätzlich ist es möglich, dass die Kunststoffschicht wenigstens ein Sicherheitsmerkmal aufweist, bevorzugtermassen ausgewählt aus der Gruppe: Melierfasern, Planchetten, Metallfasern, Markierungsstoffe, IR- oder UV-Farbstoffe, Sicherheitspigmente, Fluoreszenzfarbstoffe, Effektpigmente, Interferenzpigmente, Metallpigmente, Reaktivfarbstoffe, UV-Absorber, Stabilisatoren, wobei diese Sicherheitsmerkmale als Additive der Schmelze beigegeben oder in der Nähe des Walzenspaltes eingestreut werden, wobei vorzugsweise die Kunststoffschicht wenigstens ein Sicherheitsmerkmal in Form eines Sicherheitsfadens aufweist, wobei der Sicherheitsfaden in den Walzenspalt geführt wird. Eine hohe Transparenz der Fenster, wie sie mit dem erfindungsgemässen Verfahren herbeigeführt werden kann, ist insbesondere in solchen Fällen, wo die Fenster zusätzliche optische Merkmale wie oben ausgeführt enthalten, ausserordentlich vorteilhaft.

Beide Papierlagen können jeweils durchgehende Aussparungen aufweisen, und diese Aussparungen können derart registriert zugeführt werden, dass sich wenigstens bereichsweise Sichtfenster und/oder Regionen ausbilden, in welchen die Kunststoffschicht nur einseitig frei liegt, wobei die Kunststoffschicht wenigstens ein Sicherheitsmerkmal in Form eines Sicherheitsfadens aufweist, wobei der Sicherheitsfaden in den Walzenspalt geführt wird, und wobei der Sicherheitsfaden in den Sichtfenstern und/oder Regionen im endgültigen Mehrschichtsubstrat in Aufsicht sichtbar ist, wobei insbesondere bevorzugt die Regionen, in welchen die Kunststoffschicht nur einseitig frei liegt, derart registriert bevorzugt in Verlaufsrichtung des Sicherheitsfadens alternierend auf Ober- und Unterseite des Mehrschichtsubstrates angeordnet sind, dass der Sicherheitsfaden als Window-Faden von beiden Seiten in Aufsicht sichtbar ist.

Wenigstens ein Sicherheitsmerkmal kann dabei maschinenlesbar sein.

Des weiteren betrifft die vorliegende Erfindung ein Mehrschichtsubstrat herstellbar nach einem Verfahren, wie es oben beschrieben wurde.

Zudem betrifft die vorliegende Erfindung ein Mehrschichtsubstrat hergestellt nach einem Verfahren, wie es oben beschrieben wurde.

Ein solches Mehrschichtsubstrat ist bevorzugtermassen dadurch gekennzeichnet, dass wenigstens eine der Papierlagen wenigstens eine bereichsweise durchgehende Aussparung aufweist, wobei diese bevorzugtermassen beide Papierlagen jeweils durchgehende Aussparungen aufweisen, und diese Aussparungen derart registriert angeordnet, dass sich wenigstens bereichsweise Sichtfenster und/oder Regionen, in welchen die Kunststoffschicht nur einseitig frei liegt, ausbilden, und dass vorzugsweise zusätzlich im Kantenbereich der Aussparungen Abplattungen vorhanden sind.

Beide Papierlagen können jeweils durchgehende Aussparungen aufweisen, und diese Aussparungen können derart registriert zugeführt werden, dass sich wenigstens bereichsweise Sichtfenster und/oder Regionen ausbilden, in welchen die Kunststoffschicht nur einseitig frei liegt, und dass die Kunststoffschicht wenigstens ein Sicherheitsmerkmal in Form eines Sicherheitsfadens aufweist, wobei der Sicherheitsfaden in den Sichtfenstern und/oder Regionen im endgültigen Mehrschichtsubstrat in Aufsicht sichtbar ist, wobei insbesondere bevorzugt die Regionen, in welchen die Kunststoffschicht nur einseitig frei liegt, derart registriert bevorzugt in Verlaufsrichtung des Sicherheitsfadens alternierend auf Ober- und Unterseite des Mehrschichtsubstrates angeordnet sind, dass der Sicherheitsfaden als Window-Faden von beiden Seiten in Aufsicht sichtbar ist

Bei einem solchen Mehrschichtsubstrat handelt es sich beim thermoplastischen polymeren Material der Kunststoffschicht vorzugsweise um ein transparentes Material, vorzugsweise um Polyamid, und in Bereichen von Sichtsfenstern sind diese hochtransparent (vgl. die oben angegebenen Werte von 80 - 95%) und verfügen über eine glatte Oberfläche.

Die ausgebildeten Sichtfenster können prozessbedingt eine leichte Welligkeit oder Ausbeulung aufweisen, die sich dadurch ergibt, dass die Sichtfenster im Kontakt mit einer Walze erstarren, auf der Walze kleben, und beim Ablösen von der Walze leicht gedehnt und plastisch deformiert werden. Diese plastische Deformation kann durch das erfindugsgemässe Verfahren rückgängig gemacht werden, vermutlich indem durch die Flammbehandlung respektive die Heißluftbeaufschlagung das Polymer soweit erwärmt wird, dass die Polymerketten genügend Mobilität erhalten, um zu relaxieren, wodurch das Sichtfenster gespannt und Welligkeit oder Ausbeulungen geglättet werden. Sichtfenster ohne Flammpolierung/Heißluftbeaufschlagung können Wellen oder Beulen aufweisen, die bis zu einigen Zehntel Millimeter gegen beide Seiten aus der Idealebene aufstehen, die aber nach der Flammpolierung/Heißluftbeaufschlagung komplett geglättet werden und keine messbare Auslenkung aus der Idealebene mehr vorliegt.

Bevorzugtermassen handelt es sich bei einem solchen Mehrschichtsubstrat beim Material der Kunststoffschicht um ein amorphes Polyamid, bevorzugt mit einem Glasübergangspunkt oberhalb von 20°C, insbesondere bevorzugt ist ein Polyamid 12 und/oder ein amorphes Copolyamid 12, gegebenenfalls in Mischung mit einem weiteren Polyamid in einem Anteil von bis zu 30 %, vorzugsweise mit einem weiteren Polyamid auf MACM12 Basis. Generell bevorzugt sind Polymere aus der Klasse der Polyamide, wie beispielsweise Polyamid 6, Polyamid 6.6, Polyamid 10, Polyamid 6.10, Polyamid 12, etc. Ebenfalls bevorzugt sind Blends aus diesen Typen. In einer bevorzugten Ausführungsform wird dem Polymer ein Nukleierungshilfsmittel zur Kontrolle der Kristallinität und Kristallisationsgeschwindigkeit, z.B. in Form eines Masterbatches, zugegeben.

Die Papierschichten haben normalerweise ein Flächengewicht im Bereich von 5-500 g/m2, bevorzugt im Bereich von 10 - 80 g/m2, insbesondere bevorzugt im Bereich von 20-40 g/m2.

Ein solches Mehrschichtsubstrat verfügt typischerweise über eine Doppelfalzzahl von mehr als 1800 insbesondere von mehr als 5000.

Des weiteren betrifft die vorliegende Erfindung die Verwendung eines solchen Mehrschichtsubstrates als Abdeckmaterial, Verpackungsmaterial, Kartenmaterial, Sicherheitspapier, insbesondere als Banknote, Scheck, Ticket, Zertifikat, Aktiendokument, Obligationendokument, Urkunde, Ausweisdokument, Zutrittsdokument. Insbesondere bevorzugt ist die Verwendung als Substrat für die Herstellung einer Banknote.

Zudem betrifft die vorliegende Erfindung die Verwendung einer Flammenbehandlung oder einer Heißluftbeaufschlagung zur Oberflächenbehandlung eines Mehrschichtsubstrats auf einer Oberfläche, bei welcher sowohl erste Oberflächenbereiche vorhanden sind, in welcher eine Papierlage die Oberfläche bildet, als auch zweite Oberflächenbereiche, in welcher eine Kunststofflage die Oberfläche bildet, und dass sowohl die ersten als auch die zweiten Oberflächenbereiche einer Flammenbehandlung/Heißluftbeaufschlagung unterzogen werden, und wobei vorzugsweise die Flammenbehandlung/Heißluftbeaufschlagung von beiden Seiten bei einem Mehrschichtsubstrat aufgebaut aus zwei außen liegenden Papierlagen und einer zentralen Kunststofflage verwendet wird, bei welchem Mehrschichtsubstrat sowohl die erste als auch die zweite Papierlage durchgängige und in Überlappung angeordnete Aussparungen zur Ausbildung von Sichtfenstern aufweisen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen schematischen Prozess zur Herstellung eines Mehrschichtverbundes durch Einbringung einer zentralen Kunststofflage in voller Breite oder in Form eines Streifens;
- Fig. 2: einen schematischen Prozess zur Herstellung eines Mehrschichtverbundes durch Aufbringung einer einseitigen Kunststofflage in voller Breite oder in Form eines Streifens;
- Fig. 3: einen schematischen Prozess zur Herstellung eines Mehrschichtverbundes durch Schmelzeeintrag mittels Extrusion;
- Fig. 4: ein Schema einer Komplettanlage zur Herstellung eines erfindungsgemässen Mehrschichtverbundes;
- Fig. 5: eine schematische Ansicht entlang der Förderrichtung durch eine Substratbahn mit Flammenbehandlung über die gesamte Breite der Bahn;
- Fig. 6: eine schematische Ansicht entlang der Förderrichtung durch eine Substratsbahn mit streifenweiser Flammenbehandlung; und
- Fig. 7: die Bearbeitung einer kontinuierlich in Form einer Bahn gefertigten Substratbahn, welche von beiden Seiten mit einer Schlitzdüse mit Heißluft in jenen Bereichen beaufschlagt wird, wo die Kunststoffschicht freigelegt ist, wobei in a) eine schematische Darstellung in einem frei geführten Bahnbereich von der Seite gegeben ist und in b) eine Aufsicht von einer Seite.

### BESCHREIBUNG BEVORZUGTER AUSFÜHRUNGSFORMEN

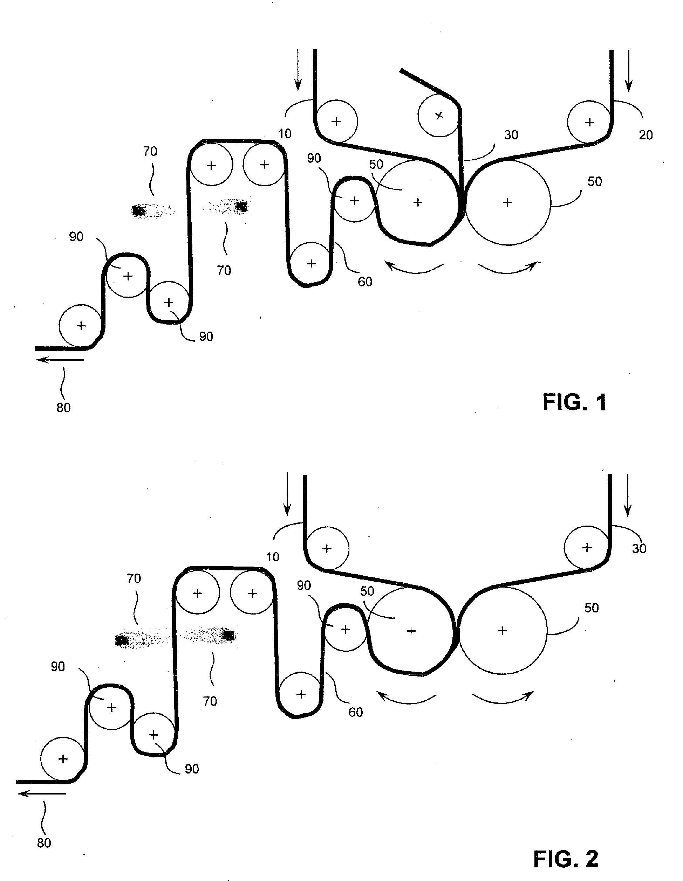

Figur 1 zeigt ein Verfahren zur Herstellung eines Mehrschichtsubstrats 60, bei welchem die erfindungsgemässe Flammenbehandlung respektive eine Heißluftbeaufschlagung Anwendung finden kann. Bei diesem Prozess werden zwei Papierbahnen, eine erste Papierbahn 10 und eine zweite Papierbahn 20, normalerweise ab Rolle, zugeführt. Zwischen diese zwei Papierbahnen wird eine Kunststoffbahn, typischerweise auf Basis von Polyamid zugeführt. Die Kunststoffbahn 30 wird zwischen die beiden Papierbahnen 10, 20 geführt und anschliessend zwischen einem Walzenpaar 50 gepresst. Dabei wird eine Kunststoffbahn 30 eingesetzt, welche aus einer einzigen Polymerlage besteht und es gibt keinen zusätzlichen Haftvermittler. Die Haftung zwischen den drei Schichten 10, 20, 30 wird hergestellt, indem die drei Lagen unter Anwendung von Druck und erhöhter Temperatur zwischen den beiden Walzen 50 zusammengepresst werden, wobei die Kunststoffschicht wenigstens teilweise aufschmilzt und einen Verbund mit der jeweils angrenzenden Papierschicht ausbildet. Im wesentlichen geht es hier also um ein Herstellungsverfahren, wie es in der WO 2004/076198 beschrieben wird, und der Offenbarungsgehalt dieser Schrift wird hinsichtlich dieses Verfahrensschrittes ausdrücklich in den Offenbahrungsgehalt dieser Anmeldung mit eingeschlossen.

Eine der beiden Papierlagen, normalerweise sogar beide Papierlagen, verfügen dabei über Durchgangsöffnungen, so dass sich anschliessend an die Zusammenführung und Verbindung der Bahn sogenannte Fenster ausbilden, wenn solche Durchgangsöffnungen der beiden Bahnen 10, 20 übereinander zu liegen kommen, resp. Bereiche, in denen die Kunststoffschicht auf einer Seite freiliegt, wenn nur in einer der beiden Bahnen 10, 20 eine Durchgangsöffnung an der entsprechenden Stelle vorhanden ist. Diese Durchgangsöffnungen können in einem Stanzverfahren, welches der Zusammenführung der Bahnen 10, 20 vorgeschaltet ist, erzeugt werden, sie können aber auch bereits bei der Papierherstellung, beispielsweise auf dem Rundsieb durch entsprechende Höcker, erzeugt worden sein. Die Zuführung der beiden Bahnen 10, 20 erfolgt registergenau, so dass die relative Anordnung der Aussparungen wohl definiert ist und tatsächlich Fenster in diesem kontinuierlichen Prozess ausgebildet werden.

Nach dem Pressvorgang zwischen den beiden Walzen 50 wird die Mehrschichtbahn 60 zunächst um eine Kühlwalze 90 herumgeführt, anschliessend wird sie, in diesem Fall auf beiden Seiten, einer Flammenbehandlung respektive Heißluftbehandlung 70 unterzogen. Im Falle einer Flammenbehandlung erfolgt diese typischerweise durch eine Einrichtung, bei welcher eine im wesentlichen senkrecht zur Transportrichtung 80 der Bahn angeordnete Flammenfront erzeugt wird. Es handelt sich dabei um eine Gas/Luftflamme welche beispielsweise über eine Schlitzdüse oder über eine Reihe von Austrittsöffnungen erzeugt wird. Der Abstand zwischen den Austrittsöffnungen und der Bahn 90 beträgt typischerweise ca. 40 mm, d.h. die Flamme beaufschlagt die Bahn 60 und führt dazu, dass in dieser Bahn vorliegende freiliegende Kunststoffbereiche modifiziert werden. Im Falle einer Heißluftbeaufschlagung erfolgt diese typischerweise durch eine Einrichtung, bei welcher eine im wesentlichen senkrecht zur Transportrichtung 80 der Bahn angeordnete Heißluftfront erzeugt wird. Es handelt sich dabei um eine Heißluftfront, welche beispielsweise über eine oder eine Reihe von Schlitzdüse erzeugt wird. Der Abstand zwischen den Austrittsöffnungen und der Bahn 90 beträgt typischerweise ca. 40 mm, d.h. die Heißluft beaufschlagt die Bahn 60 und führt dazu, dass in dieser Bahn vorliegende freiliegenden Kunststoffbereiche modifiziert werden. Die Modifikation besteht im wesentlichen darin, dass diese freiliegenden Kunststoffbereiche, welche beispielsweise in Folge des Kontaktes mit einer der Walzen 50 in der Regel eine matte Oberfläche erhalten haben, und entsprechend nicht mehr transparent erscheinen, wieder transparent werden, es werden aber gleichzeitig auch gegebenenfalls vorhandene Baumwollfaser- oder Zellulosefaserüberreste entfernt. Eine im Bereich des Fensters vorhanden Welligkeit, die beispielsweise durch das Abziehen der Fenster von den Walzen 50 entstehen kann, wird ebenfalls ausgeglichen. Weiter werden allfällig im Polymer vorhandene Eigenspannungen gelöst und die Kristallinität von teilkristallinen Polymeren näher an das thermodynamische Gleichgewicht gebracht. Dies kann insbesondere dann von Vorteil sein, wenn an und für sich teilkristalline Werkstoffe prozessbedingt abgeschreckt werden und nahezu amorph erstarren. Dabei besteht die Gefahr, dass über die Zeit Kristallisation einsetzt und sich die Eigenschaften des Substrats dadurch ändern. Durch die Flammbehandlung kann eine solche unkontrollierbare zeitliche Veränderung bewusst vorweggenommen werden. Anschliessend an die Flammbehandlung respektive Heißluftbeaufschlagung wird die Bahn endgültig ausgekühlt, entweder durch eine Abkühlstrecke, auf der sich die Temperatur der Bahn ohne Walzenkontakt an die Umgebungstemperatur angleichen kann, und/oder durch Umschlingung um eine Kühlwalze oder ein Kühlwalzenpaar. Der Abkühlprozess kann weiter unterstützt werden, indem die Bahn mit Luft angeblasen wird. Dieses Anblasen kann auf der gesamten Breite der Bahn oder zonenweise, bevorzugtermassen über den Fenstern, stattfinden. Schlussendlich wir die Bahn entweder auf Rolle geführt oder geschnitten und abgestapelt.

Die in diesem Prozess zugeführte Kunststoffbahn 30 kann entweder die gleiche Breite haben wie die beiden Papierbahnen 10, 20, sie kann aber auch nur in Form eines oder mehrerer Streifen ausgebildet sein, welche nur in jenen Bereichen eingebracht werden, wo in den Papierbahnen 10, 20 auch Durchgangsöffnungen vorhanden sind und entsprechend Fenster oder die Kunststofflage einseitig freilegende Bereiche entstehen.

Ein weiteres Ausführungsbeispiel für einen Prozess, im Rahmen dessen die genannte Flammbehandlung respektive Heißluftbeaufschlagung vorteilhaft Anwendung finden kann, ist in Figur 2 dargestellt. Hier gibt es nur eine Papierbahn 10, und diese wird mit einer Kunststoffbahn 30 zusammengeführt und zwischen dem Walzenpaar 50 unter Anwendung von Druck und/oder erhöhter Temperatur fusioniert. Hier ist es möglich, dass die Kunststoffbahn auch zusätzlich über einen Haftvermittler zur Anbindung an die Papierbahn 10 verfügt. Wiederum wird hinter der Lamination zwischen dem Walzenpaar 50 das Mehrschichtsubstrat 60 zunächst über eine Kühlwalze 90 geführt und anschliessend wiederum von beiden Seiten einer Flammbehandlung respektive Heißluftbeaufschlagung 70 unterzogen. Auf der in dieser Figur unten dargestellten Seite wird die dort im wesentlichen die Oberfläche bildende Kunststoffbahn beaufschlagt. Auf der Oberseite wird die dort im wesentlichen vorliegende Papierbahn mit der Flamme respektive Heißluft beaufschlagt.

Sowohl Kunststoffbahn wie auch Papierbahn können nun über Aussparungen verfügen. An jenen Stellen, wo die Papierbahn über eine Aussparung verfügt, bildet sich anschliessend ein Fenster, dessen Eigenschaften durch die Flammbehandlung respektive Heißluftbehandlung verbessert werden. An jenen Stellen wo die Kunststoffbahn eine Aussparung aufweist, liegt die Papierbahn anschiessend im Bereich der Flammbehandlung respektive Heißluftbehandlung nach unten frei und die Flammbehandlung kann dazu führen, dass in diesen Bereichen insbesondere die Übergangsbereiche zwischen Papier und Kunststoffbahn verbessert werden.

Auch hier kann die Kunststoffbahn 30, welche beispielsweise auf Basis eines Polyamids ausgebildet sein kann, entweder in der gleichen Breite zugeführt wie die Papierbahn, es ist aber auch möglich, die Kunststoffbahn 30 nur in Form eines oder mehrerer Streifen zuzuführen dort, wo dann in Folge der in der Papierbahn vorgesehenen Ausnehmungen Fenster entstehen sollen.

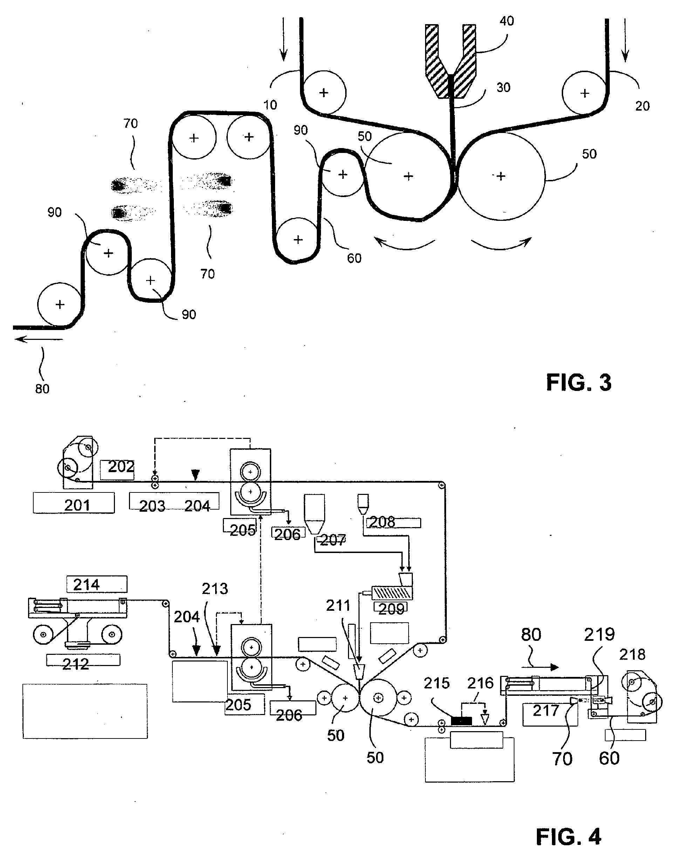

Bei der im Rahmen von Figur 3 dargestellten Herstellungsweise wird wie folgt vorgegangen:

### Ausgangsmaterialien:

Master Papierbahn 10 mit folgenden Charakteristiken: Auf einer Rundsieb-Maschine hergestelltes Sicherheitsrohpapier auf Basis von Baumwolle-Zellulose mit einem Flächengewicht von ca. 35 g/m2. Das Rohpapier verfügt über ein Wasserzeichen. Es verfügt über Registermarken (scharfe Wasserzeichen, sog. Wassermarken) zur Synchronisation des Stanzwerks.

Slave Papierbahn 20 mit folgenden Charakteristiken: Auf einer Rundsieb-Maschine, alternativ auf einer Langsieb-Maschine hergestelltes Sicherheitsrohpapier auf Basis von Baumwolle-Zellulose mit einem Flächengewicht von ca. 35 g/m2. Das Rohpapier verfügt nicht über Wasserzeichen.

Beiden Papierbahnen sind folgende Merkmale gemeinsam: Eingebettet in das Rohpapier sind Melierfasern.

Die Bahnbreite beträgt in beiden Fällen 1000-1100mm. Die Dicke der Papierbahnen 10, 20 beträgt circa 65-70 µm.

Beide Papierbahnen sind mit einer Oberflächenleimung (Sizing) versehen.

Polymer für die Ausbildung der Kunststoffschicht 30: Amorphe, mittel- bis hochviskose

Polyamid-12 Typen der EMS-Chemie (Grilamid L 20 oder L 25), ggf. als Blend mit 20 - 30 % transparenten, thermoplastisch verarbeitbaren Polyamiden auf Basis aliphatischer und cycloaliphatischer Bausteine (z.B. TR-Typen, so z.B. Grilamid TR 90).

### Herstellungsverfahren (vergleiche Figur 3):

Die beiden Papierbahnen 10 und 20 werden von den Rollen respektive zugeführt. Beide Papierbahnen werden zunächst an ihrer anschliessend dem Kunststoff zugewandten einen Seite einer Corona-Behandlung unterzogen. Anschliessend werden in Stanzeinheiten beide Papierbahnen 10 und 20 in-line mit den Stanzöffnungen für die zukünftigen Fenster versehen.

Über Zuführtrichter wird das oben genannte Polymer in Granulat-Form in den Extruder zugeführt. Über Dosiereinheiten können zusätzlich Additive (z.B. Farbstoffe oder Prozesshilfsmittel wie Nukleierungsmittel in Form von Masterbatches) zudosiert werden.

Das Granulat wird in einem geheizten Schneckenextruder auf die Verarbeitungstemperatur gebracht und durch eine Schlitzdüse 40 gepresst, wobei sich ein Polymer-Film ausbildet. Der Polymer-Film besitzt eine Dicke, dass am Ende im fertigen Substrat 35 g/m2 Polymer vorliegen.

Unterhalb dieser Schlitzdüse 40 werden die beiden Papierbahnen 10, 20 von zwei Seiten zusammen mit dem in der Mitte parallel geführten Polymer-Film zwischen zwei Walzen 50 geführt.

Die eine Walze ist eine auf Hochglanz polierte Stahlwalze, welche auf einer Temperatur von 50°C gehalten wird.

Die zweite Walze ist eine Walze mit einer Gummi-Oberfläche, welche mit einer Teflon- oder Viton-Schicht bedeckt ist, und welche auf einer Temperatur von 20°C gehalten wird.

Die Bahngeschwindigkeit im Laminator beträgt 80 m/min

Hinter dem Spalt zwischen den beiden Walzen 50 wird die fertige Bahn 60 zunächst um eine Kühlwalze geführt (Temperatur 25°C), und anschliessend abgeführt.

Hinter dieser Kühlwalze wird die Bahn 60 der Flammenbehandlung respektive Heißluftbehandlung 70 unterzogen. In diesem Fall ist die Flammenbehandlung respektive Heißluftbehandlung auf beiden Seiten angelegt und auf jeder Seite gibt es zwei hintereinandergeschaltete Flammehandlungen/Heißluftbehandlungen. Jeweils liegen sich zwei Flammenbehandlungen respektive Heißluftbehandlungen gegenüber. Es ist auch möglich, diese beiden Behandlungen zu kombinieren, indem beispielsweise nacheinander erst eine Flammenbehandlung und anschließend eine Heißluftbehandlung entlang der Transportrichtung vorgenommen wird, oder in umgekehrter Reihenfolge. Des weiteren ist es möglich, die Substratbahn von der einen Seite eine Flammenbehandlung und von der anderen Seite eine Heißluftbehandlung zu unterziehen. Bevorzugt ist es, die Substratbahn von beiden Seiten nur einer Heißluftbehandlung zu unterziehen oder von beiden Seiten nur jeweils eine Flammenbehandlung zu unterziehen.

Der Druckträger wird anschliessend zu Bögen konfektioniert und auf Paletten gestapelt.

Eine Anlage, die ein solches Mehrschichtsubstrat herstellt, welches aus einer ersten Lage Wasserzeichenpapier 214 mit durchgehenden Aussparungen besteht, sowie aus einer Lage Papier 202 mit Aussparungen besteht, sowie aus einer innen liegenden Polymerschicht, die in schmelzflüssiger Form zwischen die beiden zusammengebrachten, mit durchgehenden Aussparungen versehenen Papierlagen hinein extrudiert wird, ist schematisch in Fig. 4 gezeigt. Ausgezogene Pfeile bezeichnen dabei Materialtransport.

Die Papierbahn 202 aus Papier wird dabei von einem Abwickler 201 zugeführt, und zunächst durch eine Zugregelung 203 und eine Bahnkantensteuerung 204 geführt. Anschliessend werden die Aussparungen in einem Stanzwerk 205 erzeugt und die Stanzlinge in einer Absaugung 206 entfernt.

Die Papierbahn 214 wird ihrerseits über einen Abwickler 212 zugeführt, und über eine Bahnkantensteuerung 204 in das Verfahren eingeführt. Dahinter befindet sich ein Leser 213 sowie wiederum ein Stanzwerk 205 zur Erzeugung der Aussparungen.

Parallel dazu wird die Kunststoffschicht respektive das dazu verwendete Material aufbereitet, indem Material aus einem Trockner 207 zugeführt und gegebenenfalls mit einem weiteren Material, beispielsweise einem Masterbatch aus einer Dosiereinrichtung 208, vermengt wird und über einen Extruder 209 zu einer Schlitzdüse 211 geführt wird. Die beiden Papierbahnen 202/214 in den Spalt zwischen den beiden Walzen 50 unter gleichzeitiger Zuführung des Kunststoffes aus der Schlitzdüse 211 gerollt. Dass so erzeugte Mehrschichtlaminat wird anschliessend in einer Bahninspektion-Endkontrolle 215 kontrolliert und mit einer gegebenenfalls vorhandenen Ink-Jet-Markierung 216 markiert, und über einen Bahnspeicher /Schneidtisch 217 geführt und am Ende auf der Vorrichtung 218 aufgerollt.

Im Bereich der Einheit 217 gibt es einen Abschnitt 219, in welchem die Bahn frei von oben nach unten geführt wird. In diesem Abschnitt findet die Flammenbehandlung respektive Heißluftbehandlung 70 an der gleichen Position relativ zur Transportrichtung von beiden Seiten statt.

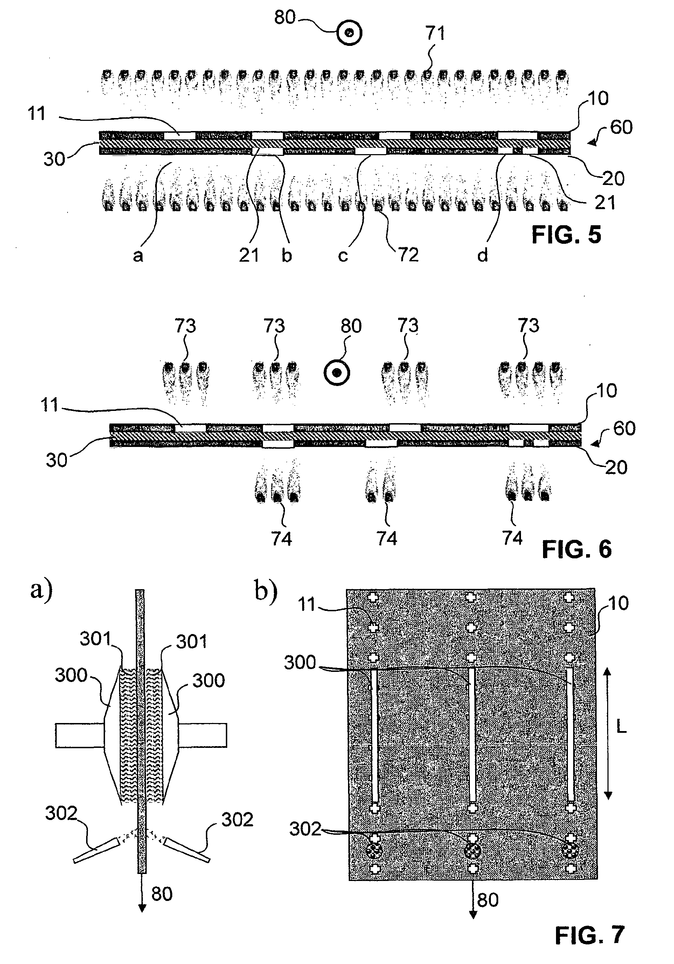

In Figur 5 ist eine schematische Schnittdarstellung in einer Ebene geschnitten senkrecht zur Transportrichtung 80 der Bahn, dargestellt. Die Figur soll dazu dienen, die unterschiedlichen Aussparungen, die im Rahmen eines solchen Prozesses die Kunststoffschicht freilegen, wenn ein Verfahren entweder gemäss Figur 1 oder gemäss einer der Figuren 3 oder 4 durchgeführt wird, zu illustrieren.

Zwischen der ersten Papierbahn 10 und der zweiten Papierbahn 20 ist die Kunststoffschicht angeordnet. In diesem Fall verfügt die Kunststoffschicht über die gleiche Breite wie die beiden Papierbahnen 10, 20. In der ersten Papierbahn 10 sind Aussparungen 11 vorgesehen und in der zweiten Papierbahn 20 sind ebenfalls Aussparungen 21 vorgesehen. Diese Aussparungen erstrecken sich in Transportrichtung 80 nicht über die Länge der Bahn sondern typischerweise nur über eine Länge im Bereich von einigen Millimetern oder Zentimetern. Sie können dabei rechteckige, quadratische, kreuzförmige oder runde oder andere Aussenlinien aufweisen.

Durch die relative Anordnung der Durchgangsöffnungen 11 und 21 entstehen so unterschiedliche Strukturen, bei welchen die Kunststoffschicht 30 entweder einseitig oder zweiseitig zur Oberfläche hin freigelegt werden resp. die Oberfläche des Substrates bilden. So wie in der Situation a dargestellt, wo nur in der ersten Papierbahn 10 eine Durchgangsöffnung vorhanden ist, bildet sich ein einseitig freigelegter Bereich oder ein sogenanntes Halbfenster. Ein klassisches sogenanntes Fenster ist in der Situation b dargestellt, hier sind die beiden Durchgangsöffnungen 11, 21 in den Bahnen 10 resp. 20 registergenau und mit gleicher Aussenlinie angeordnet, entsprechend liegt die Kunststoffschicht zu den beiden Oberflächen hin gewissermassen gleich frei und es bildet sich ein, bei einer transparenten Kunststoffschicht, durchsichtiges Fenster.

Die beiden gegenüberliegenden Durchgangsöffnungen 11, 21 können aber auch versetzt ausgebildet sein, wie dies bei der Situation c dargestellt ist. Nur jener Bereich, wo die beiden Aussparungen überlappen, entsteht ein eigentlicher durchsichtiger Fensterbereich, in den restlichen Bereichen entstehen Halbfensterbereiche. Dies ist entweder möglich wie in Situation c dargestellt, es ist aber auch möglich, die eine Aussparung grösser auszubilden und so die Halbfensterbereich nur zu einer Oberseite hin zu bilden. Eine weitere Möglichkeit ist in d dargestellt, hier ist die Aussparung in der Bahn 20 feiner strukturiert mit Stegen aus Papier, was zusätzliche Sicherheitseffekte bringen kann.

Beim Ausführungsbeispiel gemäss Figur 5 geschieht die Flammenbehandlung durch eine sich über die ganze Breite der Mehrschichtsubstratbahn 60 erstreckende lineare Flammenfront. Die Flammenbehandlung 70 erfolgt also auf der Oberseite über eine Flammenbehandlungsvorrichtung 71, welche sich im Wesentlichen über die gesamte Breite der Bahn erstreckt, und auf der Unterseite über eine zweite Flammenbehandlungsvorrichtung 72, welche sich ebenfalls über die gesamte Breite der Substratbahn erstreckt. So wird die gesamte Substratbahn gleichmässig beflammt und entsprechend resultieren über die gesamte Oberfläche der Substratbahn optimal homogene Oberflächenbedingungen. Ganz analog können die Vorrichtungen 71 auch als eine Reihe von Heißluftbehandlungsvorrichtungen 71 ausgebildet sein.

In Figur 6 ist eine abgewandelte Fassung einer solchen Flammenbehandlung respektive Heißluftbehandlung dargestellt. Hier werden nur jene Bereiche beflammt respektive mit Heißluft beaufschlagt, bei welchen auch tatsächlich Bereiche angeordnet sind, wo die Kunststofflage freiliegt. Mit anderen Worten ist hier auf der Oberseite eine Vorrichtung in Form einer Streifen-Beflammung respektive Streifen-Heißluftbeaufschlagung 73 vorgesehen, wo nur ganz bestimmte transversale Abschnitte beflammt/heißluftbeaufschlagt werden und auf der Unterseite ist ein entsprechend angepasste Beflammungsvorrichtung 74 vorgesehen, welche ebenfalls nur Streifen mit Flamme/Heißluft beaufschlagt.

Solche Vorrichtungen 73 resp. 74 können einfach dadurch erzeugt werden, in dem bei einem Schlitzbrenner die entsprechenden nicht zu beflammenden Abschnitte des Schlitzes verschlossen werden resp. in dem bei einem Brenner mit einer linearen Anordnung von Austrittsöffnungen die Austrittsöffnungen, bei welchem keine Beflammung erforderlich ist, verschlossen werden, resp. einzelne Brennerdüsen nur über den zu beflammenden Zonen eingesetzt werden. Im Falle der Verwendung von Heißluft ist es möglich, indem bei einem Schlitzgebläse die entsprechenden nicht zu bearbeitenden Abschnitte verschlossen werden, respektive indem bei einem Heißluftgebläse mit einer linearen Anordnung von Austrittsöffnungen die Austrittsöffnungen, bei welchen keine Heißluft austreten soll, verschlossen werden respektive einzelne Gebläse nur über den zu beaufschlagenden Zonen eingesetzt werden. Bei dieser Durchführung werden wirklich nur die tatsächlich zu behandelnden Kunststoff-Oberflächenbereiche mit der Flamme/Heißluft beaufschlagt, was eine möglichst schonende Behandlung des Substrates ergibt.

Brennereinrichtungen zur Durchführung des erfindungsgemässen Verfahrens sind beispielsweise erhältlich von Webber Brennertechnik GmbH, 58454 Witten, Deutschland, oder Arcotec GmbH, Mönsheim, Deutschland.

Transparente Fenster in einem Drucksubstrat können alternativ auch hergestellt werden, indem auf einer Rundsieb-Papiermaschine Kunststoffelemente eingebracht werden, wie beispielsweise in der EP1994224 oder der EP0860298 beschrieben. Alternativ kann ein Fenster erhalten werden, indem Papier mit Öffnungen versehen wird, beispielsweise durch Stanzen und/oder Laserschneiden, und diese Öffnungen mit einem mehr oder weniger transparenten Material, z.B. einem heisssiegelfähigen Streifen oder Patch verschlossen wird. Ein solches Verfahren wird beispielsweise in der EP1539502 beschrieben. Diese Materialien sind in der Regel aus Polyester hergestellt, im Allgemeinen aus Polyethylenterephthalat (PET), das in den meisten Fällen in biaxial oder uniaxial gereckter Form als Folie vorliegt. Auch in diesen Fällen handelt es sich um ein Mehrschichtsubstrat, auf welchem das erfindungsgemässe Verfahren Anwendung finden und zu den diskutierten Verbesserungen führen kann.

In Figur 7 ist die Bearbeitung einer Substratbahn von zwei Seiten in einem frei geführten, hängenden Bereich 219 mit Schlitzdüsen 300 schematisch dargestellt. Wie aus der Seitenansicht gemäß Figur 7 a) erkannt werden kann, sind auf beiden Seiten der Bahn in Transportrichtung auf der gleichen Höhe zwei Schlitzdüsen 300 angeordnet, welche (vergleiche Figur 7b) mit ihrer Längsrichtung L parallel zur Transportrichtung 80 angeordnet sind. Die Schlitzdüsen 300 erzeugen dabei eine Heißluftfront 301, die auf die Bahn gerichtet ist, typischerweise unter einem rechten Winkel zur Bahnebene.

Die Schlitzdüsen 300 sind dabei auf die hier in Form von Kreuzen ausgebildeten Ausnehmungen 11 in der ersten Papierlage 10, die ebenfalls entlang der Transportrichtung 80 in Form einer Reihe angeordnet sind, gerichtet. Für jede Reihe von Ausnehmungen 11 gibt es hier in diesem Fall eine separate Schlitzdüse 300, d.h. weil es drei Reihen von Ausnehmungen gibt, gibt es drei transversal versetzte Schlitzdüsen 300 nebeneinander. Diese können über individuelle Heißluftgebläse verfügen, es kann aber auch ein zentrales Heißluftgebläse angeordnet sein, welches alle oder Gruppen von Schlitzdüsen 300 ansteuert. Auch ist es möglich in Transportrichtung hintereinander mehrere derartige Schlitzdüsen 300 über der gleichen transversalen Position anzuordnen.

Es kann sich bei den Ausnehmungen 11 um Halbfenster oder vollständige Fenster handeln, d.h. im Letzteren Fall sind Ausnehmungen 21 auch in der zweiten Papierlage 20 in Überdeckung mit den Ausnehmungen 11 angeordnet.

Die Breite B der jeweiligen Schlitzdüse 300 ist dabei hier schmaler als die transversale (quer zur Transportrichtung) Ausdehnung der jeweiligen Ausnehmung 11, sie kann aber auch gleich oder sogar breiter sein. Typischerweise reicht es aber, wenn eine Schlitzdüse mit einer Breite eingesetzt wird, welche geringer ist (es reicht beispielsweise die Hälfte) als die Breite der Ausnehmung 11. Bevorzugtermassen ist dabei die Schlitzdüse zentriert über den Ausnehmungen angeordnet.

Stromab, in Transportrichtung 80, jeder Schlitzdüse 300 ist dabei eine Kühlluftdüse 302 angeordnet, welche einen Luftstrom auf die Bahn, ebenfalls von beiden Seiten, richtet. Dieser Luftstrom ist dabei geneigt gegen die Transportrichtung 80 gerichtet. Anstelle von individuellen derartigen Düsen 302 oder zusätzlich zu solchen kann auch eine sich über die gesamte Bandbreite erstreckende Kühlluftfront erzeugt werden.

**BEZUGSZEICHENLISTE**

| | | | |
|---|---|---|---|
| 10 | Erste Papierlage | | luftbehandlung Unterseite |
| 11 | Durchgangsöffnung in 10 | 80 | Transportrichtung der Bahn |
| 20 | Zweite Papierlage | 90 | Kühlwalze |
| 21 | Durchgangsöffnung in 20 | 201 | Abwickler, non-stop |
| 30 | Kunststoffbahn resp. | 202 | Papierbahn |
| | Polymerschmelze | 203 | Zugregelung |
| 40 | Breitschlitzdüse | 204 | Bahnkantensteuerung |
| 50 | Walzenpaar | 205 | Stanzwerk |
| 60 | Mehrschichtsubstrat | 206 | Absaugung |
| 70 | Flammenbehandlung/Heiß- | 207 | Trockner |
| | luftbehandlung | 208 | Dosiereinrichtung |
| 71 | Flammenbehandlung/Heiß- | 209 | Extruder |
| | luftbehandlung Oberseite | 211 | Schlitzdüse |
| | über gesamte Breite | 212 | Abwickler/Spleisser |
| 72 | Flammenbehandlung/Heiß- | 213 | Wassermarken-Leser |
| | luftbehandlung Unterseite | 214 | Sicherheitspapierbahn, |
| | über gesamte Breite | | Wasserzeichenpapier |
| 73 | Streifen- | 215 | Bahninspektion-Endkontrolle |
| | Flammenbehandlung/Heiß- | 216 | Ink-Jet-Markierung |
| | luftbehandlung Oberseite | 217 | Bahnspeicher/Schneidtisch |
| 74 | Streifen- | 218 | Aufrollung |
| | Flammenbehandlung/Heiß- | 219 | hängender Bahnbereich |
| 300 | Schlitzdüse | | Kunststoffbereich mit verschobenen Öffnungen in 10 und 20 |
| 301 | Heissluftfront von 300 | | |
| 302 | Kühlluftdüse | | |
| | | d | beidseitig frei liegender |
| | | | Bereich mit unterschiedlichen |
| a | einseitig freiliegender | | Öffnungen in 10 und 20 |
| | Kunststoffbereich | L | Länge der Schlitzdüse |
| b | beidseitig freiliegender | B | Breite der Schlitzdüse |
| | Kunststoffbereich mit deckungsgleichen Öffnungen in 10 und 20 | | |
| c | beidseitig frei liegender | | |

## Patentansprüche

1. Verfahren zur Herstellung eines Mehrschichtsubstrates (60), insbesondere als Druckträger wie Sicherheitspapier, umfassend wenigstens eine erste Papierlage (10, 202), sowie wenigstens eine mit der Papierlage (10, 202) verbundene Kunststoffschicht (30) aus wenigstens einem thermoplastischen polymeren Material, wobei das Mehrschichtsubstrat (60) auf wenigstens einer ersten Seite sowohl erste Bereiche aufweist, in denen die Oberfläche durch frei liegende Papierlage (10,202) gebildet wird als auch zweite Bereiche aufweist, in denen die Oberfläche durch frei liegende Kunststoffschicht (30) gebildet wird,
**dadurch gekennzeichnet, dass**
die Papierlage (10,202) und die Kunststoffschicht (30) zusammengeführt werden und/oder die Kunststoffschicht (30) in die Papierlage (10,202) eingebettet wird, und dass anschließend das gebildete Mehrschichtsubstrat (60) wenigstens auf der ersten Seite wenigstens in den zweiten Bereichen in einem kontinuierlichen Prozess einer Flammenbehandlung und/oder einer Heissluftbeaufschlagung (70) unterzogen wird.

2. Verfahren nach Anspruch 1, **dadurch gekennzeichnet, dass** eine Heißluftbeaufschlagung (70) eingesetzt wird, und dass diese dazu führt, dass die Temperatur des Mehrschichtsubstrates (60) an der Stelle des Auftreffens des entsprechenden Heißluftstromes oberhalb von 100 °C, vorzugsweise oberhalb von 120 °C, insbesondere bevorzugt oberhalb von 125 °C liegt, aber weniger als die Temperatur des Schmelzpunktes oder des Glasübergangspunktes der Kunststoffschicht (30) beträgt.

3. Verfahren nach einem der vorhergehenden Ansprüche, **dadurch gekennzeichnet, dass** eine Heißluftbeaufschlagung (70) eingesetzt wird, und dass die Heißluftbeaufschlagung (70) durch eine Schlitzdüse (300) erfolgt, welche mit ihrer Längsachse parallel zur Transportrichtung (80) des in einem kontinuierlichen Prozess als Bahn gefertigten Mehrschichtsubstrates (60) liegt, und welche auf die zweiten Bereiche gerichtet ist, wobei bevorzugtermassen auf der gegenüberliegenden Seite der Bahn des Mehrschichtsubstrates (60) eine zweite korrespondierende Schlitzdüse (300) angeordnet ist, und wobei weiterhin vorzugsweise diese Schlitzdüse (300), bei einer Transportgeschwindigkeit von wenigstens 40 m/min, vorzugsweise von wenigstens 60 m/min, eine Länge entlang der Transportrichtung (80) aufweist, welche wenigstens 10 cm, oder wenigstens 20 cm, oder wenigstens 30 cm beträgt, und deren Breite quer zur Transportrichtung (80) geringer oder gleich ist wie die Breite quer zur Transportrichtung der zweiten Bereiche, wobei diese Breite vorzugsweise höchstens 10 mm, oder höchstens 6 mm, oder höchstens 5 mm beträgt.

4. Verfahren nach einem der vorhergehenden Ansprüche, **dadurch gekennzeichnet, dass** das Mehrschichtsubstrat (60) wenigstens eine erste Papierlage (10, 202), wenigstens eine zweite Papierlage (20, 214), sowie wenigstens eine, zwischen den Papierlagen (10,20, 202, 214) angeordnete und mit den Papierlagen (10,20, 202, 214) verbundene Kunststoffschicht (30) aus wenigstens einem thermoplastischen polymeren Material umfasst, wobei wenigstens eine der Papierlagen (10, 20, 202, 214) wenigstens eine bereichsweise durchgehende Aussparung (11,21) aufweist, und dass die Kunststoffschicht (30) in schmelzflüssigem Zustand, als Präpolymer, als Polymerdispersion oder als Polymerlösung zwischen die Papierlagen (10,20, 202, 214) zugeführt wird, und die Papierlagen (10,20, 202, 214) anschliessend zwischen einem Walzenpaar (50) in einem kontinuierlichen Prozess gepresst werden, wobei sich eine stoffschlüssige Verbindung zwischen den Papierlagen (10,20, 202, 204) und der Kunststoffschicht (30) insbesondere unter Ausbildung einer Penetrationszone, in welcher Teile der Kunststoffschicht (80) mit der Masse des Faserverbundes der Papierlagen (10,20, 202, 214) verbunden sind, ergibt, und wobei die Kunststoffschicht (30) bevorzugtermassen mehr als 20 g/m2 und höchstens 100 g/m2 Flächengewicht aufweist.

5. Verfahren nach einem der vorhergehenden Ansprüche, **dadurch gekennzeichnet, dass** das Mehrschichtsubstrat (60) wenigstens eine erste Papierlage (10, 202), wenigstens eine zweite Papierlage (20, 214), sowie wenigstens eine, zwischen den Papierlagen (10,20, 202, 214) angeordnete und mit den Papierlagen (10,20, 202, 214) verbundene Kunststoffschicht (30) aus wenigstens einem thermoplastischen polymeren Material umfasst, wobei wenigstens eine der Papierlagen (10, 20, 202, 214) wenigstens eine bereichsweise durchgehende Aussparung (11,21) aufweist, und dass die Kunststoffschicht (30) als Kunststofffolie (30), vorzugsweise mit im wesentlichen gleicher Bahnbreite wie jene der beiden Papierlagen (10,20, 202, 214) oder in Form eines Streifens, zugeführt wird, und die Papierlagen (10,20, 202, 214) anschliessend zwischen einem Walzenpaar (50) in einem kontinuierlichen Prozess unter Anwendung von Hitze und/oder Druck gepresst werden, wobei sich bevorzugtermassen ohne zusätzlichen Haftvermittler eine stoffschlüssige Verbindung zwischen den Papierlagen (10,20, 202, 204) und der Kunststoffschicht (30) insbesondere unter Ausbildung einer Penetrationszone, in welcher Teile der Kunststoffschicht (80) mit der Masse des Faserverbundes der Papierlagen (10, 20, 202, 214) verbunden sind, ergibt, und wobei die Kunststoffschicht (30) bevorzugtermassen mehr als 20 g/m2 und höchstens 100 g/m2 Flächengewicht aufweist,
wobei vorzugsweise beide Papierlagen (10, 20, 202, 214) jeweils durchgehende Aussparungen (11,21) aufweisen, und diese Aussparungen (11,21) derart registriert zugeführt werden, dass sich wenigstens bereichsweise Sichtfenster (b-d) ausbilden.

6. Verfahren nach einem der vorhergehenden Ansprüche, **dadurch gekennzeichnet, dass** es sich beim thermoplastischen polymeren Material der Kunststoffschicht (30) um ein transparentes Material mit einer Lichttransmission von wenigstens 60% handelt, bevorzugtermassen um ein Material mit einer Lichttransmission von wenigstens 80 % und bevorzugtermassen einer Trübung von höchstens 10, insbesondere bevorzugt von höchstens 5, jeweils bestimmt bei einer Dicke von 2 mm nach ASTM D 1003.

7. Verfahren nach einem der vorhergehenden Ansprüche, **dadurch gekennzeichnet, dass** die Heissluftbeaufschlagung und/oder die Flammenbehandlung (70) im kontinuierlichen Prozess an einer Stelle durchgeführt wird, wo die Substratbahn (60) frei geführt wird und nicht in Kontakt mit einer Walze oder einem Führungselement steht, wobei diese vorzugsweise an einer Stelle erfolgt, wo die Substratbahn (60) in im wesentlichen vertikaler Richtung, bevorzugt von oben nach unten, geführt wird, wobei vorzugsweise bei der Flammenbehandlung (70) eine Gas/Luft Flamme und/oder eine Gas/Sauerstoff Flamme eingesetzt wird, wobei vorzugsweise ein Energieeintrag im Bereich von 0.4-2 j/mm2 auf die Oberfläche der Bahn erfolgt, insbesondere bevorzugt im Bereich von 0.6-1 j/mm2.

8. Verfahren nach einem der vorhergehenden Ansprüche, **dadurch gekennzeichnet, dass** zur Heissluftbeaufschlagung (70) wenigstens ein, bevorzugt unmittelbar auf den zu bearbeitenden Oberflächenbereich des Mehrschichtsubstrates (60) gerichtetes Heissluftgebläse eingesetzt wird, wobei vorzugsweise ein Heissluftstrom, am zu bearbeitenden Oberflächenbereich des Mehrschichtsubstrates (60), von im Bereich von 500-1000 1/min, vorzugsweise von 600-800 1/min, erfolgt, dies vorzugsweise derart, dass die heisse Luft am zu bearbeitenden Oberflächenbereich des Mehrschichtsubstrates (60) eine Temperatur von mehr als 200 °C, vorzugsweise im Bereich von 180-250°C, aufweist, dies vorzugsweise bei einer Transportgeschwindigkeit der Bahn von mehr als 40 m/min, vorzugsweise von mehr als 60 m/min, insbesondere bevorzugt im Bereich von 70-100 m/min.

9. Verfahren nach einem der vorhergehenden Ansprüche, **dadurch gekennzeichnet, dass** bei der Heissluftbeaufschlagung und/oder der Flammenbehandlung (70) der Abstand zwischen der Austrittsöffnung des brennbaren Gasgemisches respektive der Heissluft und der Substratbahn (60) im Bereich von 5-100 mm liegt, vorzugsweise im Bereich von 10-50 mm
und/oder dass das Mehrschichtsubstrat (60) von beiden Seiten einer Heissluftbeaufschlagung und/oder einer Flammenbehandlung (70) unterzogen wird.

10. Verfahren nach einem der vorhergehenden Ansprüche, **dadurch gekennzeichnet, dass** das Mehrschichtsubstrat (60) im Bereich der Heissluftbeaufschlagung respektive der Flammenbehandlung (70) mit einer Bahngeschwindigkeit im Bereich von 40-160 m/s, bevorzugt im Bereich von 70-120 m/s geführt wird.

11. Verfahren nach einem der vorhergehenden Ansprüche, **dadurch gekennzeichnet, dass** die Substratbahn aus Mehrschichtsubstrat (60) entlang der Transportrichtung (80) über erste Oberflächenstreifenbereiche verfügt, in welchen die Kunststofffolie (30) nicht an die Oberfläche tritt und die Oberfläche ausschließlich durch eine der Papierbahnen (10,20,202,214) gebildet wird, und über zweite Oberflächenstreifenbereiche, an welchen die Kunststofffolie wenigstens abschnittsweise, bevorzugt ausschließlich abschnittsweise, an die Oberfläche tritt, und dass die Heissluftbeaufschlagung respektive die Flammenbehandlung (70) als Streifen-Heissluftbeaufschlagung respektive Streifen-Flammenbehandlung (74) durchgeführt wird, so dass nur die zweiten Oberflächenstreifenbereiche mit Heissluft respektive Flamme beaufschlagt werden
und/oder, **dadurch gekennzeichnet, dass** es sich beim thermoplastischen polymeren Material der Kunststoffschicht (30) um Polyethylen (PE), Polypropylen (PP), Polyvinylchlorid (PVC), weich-PVC (PVC-P), Polystyrol (PS), Polycarbonat (PC), Polymethylmethacrylat (PMMA), Polyoxymethylen (POM), Polyethylenterephthalat (PET), Polyester, co-Polyester, Polyetheretherketon (PEEK), Polyamid, insbesondere Polyamid 6 (PA6), Polyamid 12 (PA12), Polyamid 10, Polyamid 610, Polyamid 66, Polyamid auf Basis aliphatischer und cycloaliphatischer Bausteine wie insbesondere MACM12 oder amorphes Co-Polyamid, bevorzugt auf Basis von PA12, oder um Copolymere oder Blends daraus handelt.

12. Verfahren nach einem der vorhergehenden Ansprüche, **dadurch gekennzeichnet, dass** wenigstens eine der Papierlagen (10, 20, 202, 214) wenigstens ein Sicherheitsmerkmal (110), bevorzugt ausgewählt aus der Gruppe: Wasserzeichen, insbesondere Graustufen-Wasserzeichen, Sicherheitsfaden, OVD, Melierfasern, Sicherheitspigmente, irisierende Farbapplikationen, Chip, insbesondere RFID-Chip, Transponder, Magnetstreifen, aufweist
und/oder dass die Kunststoffschicht (30) wenigstens ein Sicherheitsmerkmal aufweist, bevorzugtermassen ausgewählt aus der Gruppe: Melierfasern, Planchetten, Metallfasern, Markierungsstoffe, IR- oder UV-Farbstoffe, Sicherheitspigmente, Fluoreszenzfarbstoffe, Effektpigmente, Interferenzpigmente, Metallpigmente, Reaktivfarbstoffe, UV-Absorber, Stabilisatoren, wobei diese Sicherheitsmerkmale als Additive der Schmelze beigegeben oder in der Nähe des Walzenspaltes eingestreut werden, wobei vorzugsweise die Kunststoffschicht (30) wenigstens ein Sicherheitsmerkmal in Form eines Sicherheitsfadens aufweist, wobei der Sicherheitsfaden in den Walzenspalt geführt wird.

13. Verfahren nach einem der vorhergehenden Ansprüche, **dadurch gekennzeichnet, dass** die Papierschichten ein Flächengewicht im Bereich von 5-500 g/m2, bevorzugt im Bereich von 10 - 80 g/m2, insbesondere bevorzugt im Bereich von 20-40 g/m2 aufweisen, und/oder **dadurch gekennzeichnet, dass** das Mehrschichtsubstrat eine Doppelfalzzahl von mehr als 1800, insbesondere von mehr als 5000 aufweist.

14. Verfahren nach einem der vorhergehenden Ansprüche, **dadurch gekennzeichnet, dass** das Mehrschichtsubstrat ein Abdeckmaterial, Verpackungsmaterial, Kartenmaterial, Sicherheitspapier, insbesondere als Banknote, Scheck, Ticket, Zertifikat, Aktiendokument, Obligationendokument, Urkunde, Ausweisdokument, Zutrittsdokument ist.

15. Verwendung einer Heissluftbeaufschlagung und/oder einer Flammenbehandlung (70) zur Oberflächenbehandlung eines Mehrschichtsubstrats (60) auf einer Oberfläche, bei welcher sowohl erste Oberflächenbereiche vorhanden sind, in welcher eine Papierlage die Oberfläche bildet, als auch zweite Oberflächenbereiche, in welcher eine Kunststofflage die Oberfläche bildet, und wobei sowohl die ersten als auch die zweiten Oberflächenbereiche einer Heissluftbeaufschlagung und/oder einer Flammenbehandlung (70) unterzogen werden, wobei bevorzugtermassen die Heissluftbeaufschlagung und/oder Flammenbehandlung (70) bei einem Mehrschichtsubstrat (60) aufgebaut aus zwei außen liegenden und die Oberfläche bildenden Papierlagen (10,20) und einer zentralen Kunststofflage (30) verwendet wird, bei welchem Mehrschichtsubstrat (60) sowohl die erste als auch die zweite Papierlage durchgängige und in Überlappung angeordnete Aussparungen (11,21) zur Ausbildung von Sichtfenstern aufweisen, wobei vorzugsweise die Heissluftbeaufschlagung und/oder Flammenbehandlung (70) von beiden Seiten erfolgt.

## Claims

1. Method for the production of a multilayer substrate (60), in particular as a print carrier such as a security paper, comprising at least one first paper layer (10, 202), as well as one plastic layer (30) of at least one thermoplastic polymer material attached to the paper layer (10, 202), wherein the multilayer substrate (60) comprises on at least one first side at least first areas, in which the surface is given by freely accessible paper layer (10, 202) as well as second areas, in which the freely accessible surface is given by freely accessible plastic layer (30),
**characterized in that**,
the paper layer (10, 202) and the plastic layer (30) are brought together and/or the plastic layer (30) is embedded into the plastic layer (10, 202),
and **in that** subsequently the formed multilayer substrate (60) is treated on the first side at least in the second areas in a continuous process with a flame treatment and/or a hot air treatment (70).

2. Method according to Claim 1, **characterized in that** a hot air treatment (70) is used and that this has the effect that the temperature of the multilayer substrate (60) at the position of the impact of the corresponding hot air stream is about 100°C, preferably above 120°C, particularly preferably above 125°C, but is lower than the temperature of the melting point or the glass transition temperature of the plastic layer (30).

3. Method according to any of the preceding claims, **characterized in that** a hot air treatment (70) is used, and that the hot air treatment (70) is applied by means of a slit nozzle (300), which is provided with its long axis parallel to the transport direction (80) of the multilayer substrate (60) produced in a continuous process as a band, and which is directed to the second areas, wherein preferably on the opposite side of the band of the multilayer substrate (60) a second corresponding slit nozzle (300) is arranged, and wherein further preferably this slit nozzle (300) at a transport speed of at least 40m/min preferably of at least 60m/min, has a length along the transport direction (80), which is at least 10 centimeter or at least 20 centimeter, or at least 30 centimeter, and the width of which perpendicular to the transport direction (80) is smaller or equal to the width of the second areas perpendicular to the transport direction, wherein this width is preferably at most 10mm, or at most 6mm, or at most 5 mm.

4. Method according to any of the preceding claims, **characterized in that** the multilayer substrate (60) comprises at least one first paper layer (10, 202), at least one second paper layer (20, 214) as well as at least one plastic layer (30) arranged between the paper layers (10, 20, 202, 214) and attached to the paper layers (10, 20, 202, 214), wherein the plastic layer (30) consists of a thermoplastic polymer material, wherein at least one of the paper layers (10, 20, 202, 214) comprises at least one partially fully penetrating window (10, 21) and that the plastic layer (30) is applied in a melt flowing stage, as prepolymer, as polymer dispersion or as polymer solution between the paper layers (10, 20, 202, 214), and the paper layers (10, 20, 202, 214) are subsequently pressed in a continuous process between a pair of rollers (50), wherein an adhesive bond between the paper layers (10, 20, 202, 214) and a plastic layer (30) is formed, in particular with generation of a penetration zone, in which parts of the plastic layer (80) are adhesively connected with the fiber arrangement of the paper layers (10, 20, 202, 214), and wherein the plastic layer (30) preferably has an surface weight of more than 20g/m2 and most 100g/m2.

5. Method according to any of the preceding claims, **characterized in that** the multilayer substrate (60) comprises at least one first paper layer (10, 202), at least one second paper layer (20, 214) as well as at least one plastic layer (30) of at least one thermoplastic polymer material arranged between the paper layers (10, 20, 202, 214) and adhesively attached to the paper layers (10, 20, 202, 214), wherein at least one of the paper layers (10, 20, 202, 214) comprises an at least areawise fully penetrating window (11, 21), and **in that** the plastic layer (30) is introduced into the process as a plastic foil (30) preferably with essentially the same band width as the one of the two paper layers (10, 20, 202, 214) or in the form of a strip, and the paper layers (10, 20, 202, 214) are subsequently pressed between a pair of rollers (50) in a continuous process under application of heat and/or pressure, wherein preferably an adhesive bond is generated between the paper layers (10, 20, 202, 204) and the plastic layer (30) is formed without additional adhesive providing means, and wherein the plastic layer (30) has an surface weight of more than 20g/m2 and at most 100g/m2,
wherein preferably both paper layers (10, 20, 202, 214) have in each case fully penetrating windows (10, 21), and these windows (11, 21) are introduced into the process in a registered manner, such that at least partially see through windows (b-d) are formed.

6. Method according to any of the proceeding claims, **characterized in that** the thermoplastic polymer material of the plastic layer (30) is a transparent material with a light transmission of at least 60 %, preferably of a material with a light transmission of at least 80 %, and preferably with a haze of at most 10, in particular of at most 5, in each case determined at a thickness of 2 mm according to ASTM D1003.

7. Method according to any of the preceding claims, wherein the hot air processing and/or the flame processing (70) is applied in a continuous process at a position, where the substrate band (60) is freely guided, and not in contact with a roll or a guide element, and wherein this preferably takes place at a position, where the substrate band (60) is guided in a essentially vertical direction, preferably from above to below, wherein preferably in case of the flame treatment (70) a gas/air flame and/or a gas/oxygen flame is used, and wherein preferably the energy introduction is in the range of 0.4-2j/mm2 on the surface of the band, in particular preferably in the range of 0.6-1j/mm2.

8. Method according to any of the preceding claims, wherein for the hot air treatment (70) at least one, hot air blower is used, preferably directed onto the surface area of the multi-layer substrate (60) to be treated, wherein preferably a hot air stream, at the to be treated surface area of the multilayer substrate (60) of a range of 50-1000l/min, preferably of 600-800l/min is applied, this in particular in a way such that the hot air at the surface area to be treated of the multilayer substrate (60) has a temperature of more than 200 °C, preferably in the range of 180- 250°C, this preferably at a transport speed of the band of more than 40m/min, preferably of more than 60m/min, particularly preferably in the range of 70-100m/min.

9. Method according to any of the preceding claims, **characterized in that** in the hot air treatment and/or flame treatment (70) the distance between the exit opening of the nozzle of the burnable gas mixture or the hot air and the substrate band (60) is in a range of 5-100 mm preferably in the range of 10-50 mm,
and/or the multilayer substrate (60) is treated from both sides with a hot air treatment and/or a flame treatment (70).

10. Method according to any of the preceding claims, **characterized in that** the multilayer substrate (60) in the area of the hot air treatment or the flame treatment (70), respectively, is transported with a band speed in the range of 40-160m/s preferably in the range of 70-120 m/s.

11. Method according to any of the preceding claims, **characterized in that** the substrate band of the multilayer substrate (60) comprises, along the transport direction (80), first surface stripe areas, in which the plastic foil (30) is not on the surface, and where the surface is only provided by one of the paper layers (10, 20, 202, 214), and second surface stripe areas, in which the plastic foil is at least intermittently preferably only intermittently of the surface, and that the hot air treatment and the flame treatment (70) respectively is carried out as a stripe hot air treatment or stripe flame treatment (74), respectively, such that only the second surface stripe areas are treated with hot air and flames, respectively,
and/or **characterized in that** the thermoplastic polymer material of the plastic layer (30) is polyethylene (PE), polypropylene (PP), polyvinylchloride (PVC), soft-PVC (PVC-P), polystyrene (PS), polycarbonate (PC), polymethylmethacrylate (PMMA), polyoxymethylene (POM), polyethylenterephtalate (PET), polyester, co-polyester, polyetheretherketone (PEEK), polyamide, in particular polyamide 6 (PA6), polyamide 12 (PA12), polyamide 10, polyamide 610, polyamide 66, polyamide on the basis of aliphatic and cycloaliphatic building blocks such as in particular MACM12, or amorphes co-polyamide, preferably on the basis of PA12 or co-polymers or blends thereof.

12. Method according to any of the preceding claims, **characterized in that** at least one of the paper layers (10, 20, 202, 214) comprises at least one security element (110) preferably selected from the group: watermark, in particular gray shade water mark, security stripe, OVD, marking fibers, security pigments, iridescent color applications, chip, in particular RFID-transponder, magnet stripe,
and/or that the plastic layer (30) comprises at least one security element, preferably selected from the group consisting of: security fibers, planchets, metal fibers, marking substances, IR- or UV-colorants, security segments, fluorescent colorants, effect pigments, interference pigments, metal pigments, reactive colorants, UV-absorber, stabilizer, wherein these security features are added as additives to the melt or in the proximity of the slit between the rolls, wherein preferably the plastic layer (30) comprises at least one security element in the form of the security thread and wherein the security thread is introduced into the slot between the rolls.

13. Method according to any of the preceding claims, **characterized in that** the paper layers have a surface weight in the range of 5-500g/m2 preferably in the range of 10-80g/m2, particularly preferably in the range of 20-40g/m2, and/or **characterized in that** it has a double fold number of more than 1800, particularly of more than 5000.

14. Method according to any of the preceding claims, **characterized in that** the multilayer substrate is a covering material, a packaging material, a card material, a security paper, in particular a bank note, cheque, ticket, certificate, stock document, bond document, document of proof, certification document, access document.

15. Use of hot air treatment and/or flame treatment (70) for the surface treatment of a multilayer substrate (60) on its surface, in which on the one hand first surface areas are present, in which the paper layer forms the surface, as well as second surface areas, in which the plastic layer forms the surface, and wherein the first as well as the second surface areas are subjected to a hot air treatment and/or a flame treatment (70), wherein preferably the hot air treatment and/or the flame treatment (70) is applied to a multilayer substrate (60) comprised of two outer paper layers (10, 20) forming the surface, and a central plastic layer (30), in with multilayer substrate (60) the first as well as the second paper layer comprises windows, which are overlapping under the formation of see through windows, wherein preferably the hot air treatment and/or flame treatment (70) is applied from both sides.

## Revendications

1. Procédé de fabrication d'un substrat multicouche (60), notamment en tant que support d'impression tel qu'un papier de sécurité, comprenant au moins une première couche de papier (10, 202), ainsi qu'au moins une couche de plastique (30) constituée d'au moins un matériau polymère thermoplastique, reliée avec la couche de papier (10, 202), le substrat multicouche (60) comprenant sur au moins un premier côté aussi bien des premières zones dans lesquelles la surface est formée par une couche de papier exposée (10, 202) que des secondes zones dans lesquelles la surface est formée par une couche de plastique exposée (30),
**caractérisé en ce que**
la couche de papier (10, 202) et la couche de plastique (30) sont assemblées et/ou la couche de plastique (30) est incorporée dans la couche de papier (10, 202),
et **en ce que** le substrat multicouche formé (60) est ensuite soumis à un traitement à la flamme et/ou à une exposition à de l'air chaud (70) au moins sur le premier côté au moins dans les secondes zones par un procédé continu.

2. Procédé selon la revendication 1, **caractérisé en ce qu'**une exposition à de l'air chaud (70) est utilisée et **en ce que** celle-ci conduit à ce que la température du substrat multicouche (60) à l'emplacement de l'impact du courant d'air chaud en question soit supérieure à 100 °C, de préférence supérieure à 120 °C, de manière particulièrement préférée supérieure à 125 °C, mais inférieure à la température du point de fusion ou du point de transition vitreuse de la couche de plastique (30).

3. Procédé selon l'une quelconque des revendications précédentes, **caractérisé en ce qu'**une exposition à de l'air chaud (70) est utilisée et **en ce que** l'exposition à de l'air chaud (70) a lieu par une buse à fente (300), qui est agencée avec son axe longitudinal parallèle à la direction de transport (80) du substrat multicouche (60) fabriqué sous la forme d'une bande par un procédé continu, et qui est orientée vers les secondes 'zones' une seconde buse à fente (300) correspondante étant de préférence agencée sur le côté opposé de la bande du substrat multicouche (60) et cette buse à fente (300) présentant par ailleurs de préférence, à une vitesse de transport d'au moins 40 m/min, de préférence d'au moins 60 m/min, une longueur le long de la direction de transport (80) d'au moins 10 cm ou d'au moins 20 cm ou d'au moins 30 cm, et sa largeur perpendiculaire à la direction de transport (80) étant inférieure ou égale à la largeur perpendiculaire à la direction de transport des secondes zones, cette largeur étant de préférence d'au plus 10 mm ou d'au plus 6 mm ou d'au plus 5 mm.

4. Procédé selon l'une quelconque des revendications précédentes, **caractérisé en ce que** le substrat multicouche (60) comprend au moins une première couche de papier (10, 202), au moins une seconde couche de papier (20, 214) et au moins une couche de plastique (30) constituée d'au moins un matériau polymère thermoplastique, agencée entre les couches de papier (10, 20, 202, 214) et reliée avec les couches de papier (10, 20, 202, 214), au moins une des couches de papier (10, 20, 202, 214) comprenant au moins un évidement traversant dans certaines zones (11, 21), et **en ce que** la couche de plastique (30) est introduite entre les couches de papier (10, 20, 202, 214) à l'état liquide fondu, sous la forme d'un prépolymère, sous la forme d'une dispersion de polymère ou sous la forme d'une solution de polymère, puis les couches de papier (10, 20, 202, 214) sont comprimées par un procédé continu entre une paire de cylindres (50), une liaison de matière entre les couches de papier (10, 20, 202, 214) et la couche de plastique (30), notamment avec formation d'une zone de pénétration, dans laquelle des parties de la couche de plastique (80) sont reliées avec la masse du composite de fibres des couches de papier (10, 20, 202, 214), étant obtenue, et la couche de plastique (30) présentant de préférence un poids surfacique de plus de 20 g/m² et d'au plus 100 g/m².

5. Procédé selon l'une quelconque des revendications précédentes, **caractérisé en ce que** le substrat multicouche (60) comprend au moins une première couche de papier (10, 202), au moins une seconde couche de papier (20, 214) et au moins une couche de plastique (30) constituée d'au moins un matériau polymère thermoplastique, agencée entre les couches de papier (10, 20, 202, 214) et reliée avec les couches de papier (10, 20, 202, 214), au moins une des couches de papier (10, 20, 202, 214) comprenant au moins un évidement traversant dans certaines zones (11, 21), et **en ce que** la couche de plastique (30) est introduite sous la forme d'une feuille de plastique (30), ayant de préférence une largeur de bande essentiellement identique à celle des deux couches de papier (10, 20, 202, 214) ou sous la forme d'une bande, puis les couches de papier (10, 20, 202, 214) sont comprimées par un procédé continu entre une paire de cylindres (50) en utilisant de la chaleur et/ou de la pression, une liaison de matière entre les couches de papier (10, 20, 202, 214) et la couche de plastique (30), notamment avec formation d'une zone de pénétration, dans laquelle des parties de la couche de plastique (80) sont reliées avec la masse du composite de fibres des couches de papier (10, 20, 202, 214) étant obtenue de préférence sans promoteur d'adhésion supplémentaire, et la couche de plastique (30) présentant de préférence un poids surfacique de plus de 20 g/m² et d'au plus 100 g/m²,
les deux couches de papier (10, 20, 202, 214) présentant de préférence chacune des évidements traversants (11, 21), et ces évidements (11, 21) étant introduits de manière référencée afin de former des fenêtres d'observation (b-d) au moins dans certaines zones.

6. Procédé selon l'une quelconque des revendications précédentes, **caractérisé en ce que** le matériau polymère thermoplastique de la couche de plastique (30) est un matériau transparent présentant une transmission de la lumière d'au moins 60 %, de préférence un matériau présentant une transmission de la lumière d'au moins 80 % et de préférence un trouble d'au plus 10, de manière particulièrement préférée d'au plus 5, à chaque fois déterminé à une épaisseur de 2 mm selon ASTM D1003.

7. Procédé selon l'une quelconque des revendications précédentes, **caractérisé en ce que** l'exposition à de l'air chaud et/ou le traitement à la flamme (70) sont réalisés par un procédé continu à un emplacement où la bande de substrat (60) est exposée et non en contact avec un cylindre ou un élément de conduite, ceux-ci ayant de préférence lieu à un emplacement où la bande de substrat (60) est conduite en direction essentiellement verticale, de préférence du haut vers le bas, une flamme au gaz/air et/ou une flamme au gaz/oxygène étant de préférence utilisée lors du traitement à la flamme (70), un apport d'énergie dans la plage allant de 0,4 à 2 J/mm² ayant de préférence lieu sur la surface de la bande, de manière particulièrement préférée dans la plage allant de 0,6 à 1 J/mm².

8. Procédé selon l'une quelconque des revendications précédentes, **caractérisé en ce qu'**au moins un souffleur d'air chaud, de préférence orienté directement vers la zone de surface à traiter du substrat multicouche (60), est utilisé pour l'exposition à de l'air chaud (70), un courant d'air chaud dans la plage allant de 500 à 1 000 l/min, de préférence de 600 à 800 l/min, étant de préférence produit sur la zone de surface à traiter du substrat multicouche (60), celui-ci étant de préférence tel que l'air chaud sur la zone de surface à traiter du substrat multicouche (60) présente une température de plus de 200 °C, de préférence dans la plage allant de 180 à 250 °C, de préférence à une vitesse de transport de la bande de plus de 40 m/min, de préférence de plus de 60 m/min, de manière particulièrement préférée dans la plage allant de 70 à 100 m/min.

9. Procédé selon l'une quelconque des revendications précédentes, **caractérisé en ce que**, lors de l'exposition à de l'air chaud et/ou du traitement à la flamme (70), l'écart entre l'ouverture de sortie du mélange gazeux combustible ou de l'air chaud et la bande de substrat (60) est dans la plage allant de 5 à 100 mm, de préférence dans la plage allant de 10 à 50 mm, et/ou **en ce que** le substrat multicouche (60) est soumis des deux côtés à une exposition à de l'air chaud et/ou à un traitement à la flamme (70).

10. Procédé selon l'une quelconque des revendications précédentes, **caractérisé en ce que** le substrat multicouche (60) est conduit dans la zone de l'exposition à de l'air chaud ou du traitement à la flamme (70) à une vitesse de bande dans la plage allant de 40 à 160 m/s, de préférence dans la plage allant de 70 à 120 m/s.

11. Procédé selon l'une quelconque des revendications précédentes, **caractérisé en ce que** la bandé de substrat constituée du substrat multicouche (60) présente le long de la direction de transport (80) des premières zones de surface en bandes, dans lesquelles la feuille de plastique (30) n'apparaît pas à la surface et la surface est formée exclusivement par une des bandes de papier (10, 20, 202, 214), et des secondes zones de surface en bandes, dans lesquelles la feuille de plastique apparaît au moins dans certaines zones, de préférence exclusivement dans certaines zones, à la surface, et **en ce que** l'exposition à de l'air chaud ou le traitement à la flamme (70) est réalisé sous la forme d'une exposition à de l'air chaud en bandes ou d'un traitement à la flamme en bandes (74), de sorte que seules les secondes zones de surface en bandes soit exposées à l'air chaud ou à la flamme,
et/ou **caractérisé en ce que** le matériau polymère thermoplastique de la couche de plastique (30) est le polyéthylène (PE), le polypropylène (PP), le polychlorure de vinyle (PVC), le PVC souple (PVC-P), le polystyrène (PS), le polycarbonate (PC), le polyméthacrylate de méthyle (PMMA), le polyoxyméthylène (POM), le polytéréphtalate d'éthylène (PET), le polyester, le co-polyester, la polyétheréthercétone (PEEK), le polyamide, notamment le polyamide 6 (PA6), le polyamide 12 (PA12), le polyamide 10, le polyamide 610, le polyamide 66, le polyamide à base de constituants aliphatiques et cycloaliphatiques tels que notamment MACM12 ou le co-polyamide amorphe, de préférence à base de PA12, ou des copolymères ou mélanges de ceux-ci.

12. Procédé selon l'une quelconque des revendications précédentes, **caractérisé en ce qu'**au moins une des couches de papier (10, 20, 202, 214) comprend au moins une caractéristique de sécurité (110), de préférence choisie dans le groupe constitué par : les filigranes, notamment les filigranes en échelle de gris, les fils de sécurité, les MOV, les fibres colorées, les pigments de sécurité, les applications d'encre iridescente, les puces, notamment les puces RFID, les transpondeurs, les bandes magnétiques,
et/ou **en ce que** la couche de plastique (30) comprend au moins une caractéristique de sécurité, de préférence choisie dans le groupe constitué par : les fibres colorées, les planchettes, les fibres métalliques, les marqueurs, les colorants IR ou UV, les pigments de sécurité, les colorants fluorescents, les pigments à effet, les pigments à interférence, les pigments métalliques, les colorants réactifs, les absorbeurs UV, les stabilisateurs, ces caractéristiques de sécurité étant ajoutées à la masse fondue en tant qu'additifs ou étant parsemées à proximité de l'espace entre les cylindres, la couche de plastique (30) comprenant de préférence au moins une caractéristique de sécurité sous la forme d'un fil de sécurité, le fil de sécurité étant introduit dans l'espace entre les cylindres.

13. Procédé selon l'une quelconque des revendications précédentes, **caractérisé en ce que** les couches de papier présentent un poids surfacique dans la plage allant de 5 à 500 g/m², de préférence dans la plage allant de 10 à 80 g/m², de manière particulièrement préférée dans la plage allant de 20 à 40 g/m², et/ou **caractérisé en ce que** le substrat multicouche présente un nombre de doubles plis de plus de 1 800, notamment de plus de 5 000.

14. Procédé selon l'une quelconque des revendications précédentes, **caractérisé en ce que** le substrat multicouche est un matériau de réserve, un matériau d'emballage, un matériau cartonné, un papier de sécurité, notamment sous la forme d'un billet de banque, d'un chèque, d'un ticket, d'un certificat, d'un document d'action, d'un document d'obligation, d'un diplôme, d'un document de légitimation, d'un document d'accès.

15. Utilisation d'une exposition à de l'air chaud et/ou d'un traitement à la flamme (70) pour le traitement de surface d'un substrat multicouche (60) sur une surface, dans laquelle aussi bien des premières zones de surface sont présentes, dans lesquelles une couche de papier forme la surface, que des secondes zones de surface, dans lesquelles une couche de plastique forme la surface, et aussi bien les premières que les secondes zones de surface sont soumises à une exposition à de l'air chaud et/ou à un traitement à la flamme (70), l'exposition à de l'air chaud et/ou le traitement à la flamme (70) étant de préférence utilisés sur un substrat multicouche (60) constitué de deux couches de papier (10, 20) extérieures formant la surface et d'une couche de plastique centrale (30), aussi bien la première que la seconde couche de papier dudit substrat multicouche (60) présentant des évidements (11, 21) traversants et agencés en chevauchement pour former des fenêtres d'observation, l'exposition à de l'air chaud et/ou le traitement à la flamme (70) ayant de préférence lieu des deux côtés.
